(19) Europäisches Patentamt
European Patent Office
Office européen des brevets

(11) Veröffentlichungsnummer: **0 000 971**
**B1**

(12) **EUROPÄISCHE PATENTSCHRIFT**

(45) Veröffentlichungstag der Patentschrift: **24.03.82**

(51) Int. Cl.³: **C 09 D 3/58,** C 09 D 5/40, C 09 D 5/42

(21) Anmeldenummer: **78200151.5**

(22) Anmeldetag: **22.08.78**

# (54) Pulverförmige Überzugsmittel.

(30) Priorität: **25.08.77 DE 2738270**
**10.08.78 DE 2835029**

(43) Veröffentlichungstag der Anmeldung:
**07.03.79 Patentblatt 79/5**

(45) Bekanntmachung des Hinweises auf die Patenterteilung:
**24.03.82 Patentblatt 82/12**

(84) Benannte Vertragsstaaten:
**BE DE FR GB LU NL**

(56) Entgegenhaltungen:
NL - A - 7 601 739
US - A - 3 914 335

(73) Patentinhaber: **CHEMISCHE WERKE HÜLS AG**
**Postfach 1320**
**D-4370 Marl 1 (DE)**

(72) Erfinder: **Gras, Rainer, Dr.**
**An der Ziegelei 91**
**D-4690 Herne 2 (DE)**
Erfinder: **Obendorf, Johann, Dr.**
**Pastorsbusch 40**
**D-4270 Dorsten (DE)**
Erfinder: **Schott, Ansgar, Dr.**
**Steinring 70**
**D-4630 Bochum (DE)**
Erfinder: **Wolf, Elmar, Dr.**
**Am Böckenbusch 3a**
**D-4690 Herne 2 (DE)**

(74) Vertreter: **Steil, Hanna, Dipl.-Chem. et al,**
**RSP PATENTE-PB 40 Holsterhauser Strasse 160**
**Postfach 2840**
**D-4690 Herne 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 971 B1

## Pulverförmige Überzugsmittel

Es sind bereits verschiedene heißhärtbare Epoxidharzmassen beschrieben worden. Dicyandiamid und Polycarbonsäureanhydride sind die am häufigsten verwendeten Epoxidharz-Heißhärter. Sowohl die Polycarbonsäureanhydrid- wie auch die Dycandiamid/Epoxid-Gemische sind bei Raumtemperatur nahezu unbegrenzt lagerstabil, sie besitzen jedoch den Nachteil, daß zu ihrer Aushärtung zu hohe Temperaturen bzw. zu lange Härtungszeiten benötigt werden. In der DE—OS 22 48 776 wird als wesentlicher technischer Fortschritt herausgestellt, daß bei Verwendung von Imidazolin-Derivaten als Härter in Epoxidharz-Pulver-Lacken die erforderlichen Härtungstemperaturen und -zeiten wesentlich niedriger bzw. kürzer als bei mit gebräuchlichen Härtern (wie Polycarbonsäureanhydride und Dicyandiamid) formulierten Pulver-Lacksystemen sind.

Es besteht weiter großes Interesse an Härtern, deren Gemische mit 1,2-Epoxidverbindungen lagerstabil sind und auch bei erhöhten Temperaturen schnell aushärten.

Es wurden nun Härter/1,2-Epoxidverbindungskombinationen gefunden, die in überraschender Weise die wichtigsten vorteilhaften Eigenschaften der oben angeführten Härtungsmittel in sich vereinigen, ohne deren Nachteile zu besitzen.

Gegenstand der Erfindung sind pulverförmige Überzugsmittel mit hoher Lagerstabilität und einer Korngröße kleiner als 0,25 mm, vorzugsweise zwischen 0,02 und 0,06 mm, auf der Grundlage von 1,2-Epoxidverbindungen mit mehr als einer 1,2-Epoxidgruppe im Molekül und einem unteren Aufschmelzpunkt von >40°C, Härtungsmitteln und üblichen Lackzusätzen, die dadurch gekennzeichnet sind, daß das Überzugsmittel als Härtungsmittel mit cyclischen Amidinen der allgemeinen Formel

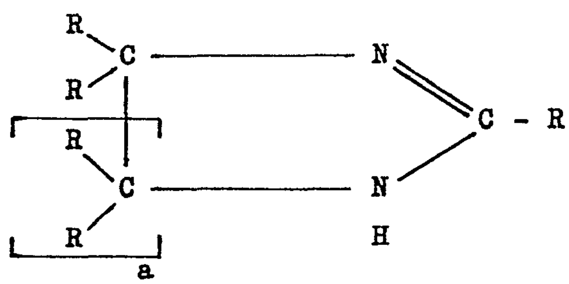 blockierte Polyisocyanate

enthält, worin a 1 oder 2, R gleiche oder verschiedene Substituenten aus der Gruppe Wasserstoff, Alkyl-, Cycloalkyl- Aralkyl- und Arylrest und gegebenenfalls 2 geminale oder vicinale R's gemeinsam Bestandteil eines unsubstituierten oder alkylsubstituierten Cycloalkylringes sind, wobei das Härtungsmittel zu 2—15 Gew.%, bezogen auf die Menge an fester 1,2-Epoxidverbindung, in dem Überzugsmittel vorhanden ist. Die erfindungsgemäßen Härter sind mit den meisten Epoxidharzen ausgezeichnet verträglich und liefern bei erhöhten Temperaturen homogene. Schmelzen, die sehr gut zur Herstellung von Sinterpulvern geeignet sind. Die erfindungsgemäß härtbaren Gemische sind bei Zimmertemperatur lagerstabil; die Aushärtungszeiten liegen im Temperaturintervall von 140—200°C innerhalb von 25—5 Minuten. Der Härtungsmechanismus ist mutmaßlich komplex. Einmal wird die Homopolymerisation der 1,2-Epoxidgruppen durch den basischen N der erfindungsgemäßen Verbindungen katalysiert, zum anderen erfolgt bei der Härtung eine Deblockierung der Härter in die cyclischen Amidine und die Polyisocyanate. Das in Freiheit gesetzte Amidin katalysiert wiederum die Homopolymerisation der 1,2-Epoxidgruppen, während die freigewordenen NCO-Gruppen mit den OH-Gruppen des Epoxidharzes über eine NCO/OH-Reaktion unter Bildung von Urethanbindungen reagieren. Auch darf die Oxazolidinon-Bildung durch Reaktion von NCO-Gruppen mit Epoxid-Gruppen nicht vernachlässigt werden. Die gehärteten Überzüge bzw. Beschichtungen zeichnen sich durch sehr gute chemische und mechanische Eigenschaften aus.

Zur Herstellung der erfindungsgemäßen Gemische, die als Pulverlacke Verwendung finden sollen, eignen sich besonders hydroxylgruppenhaltige 1,2-Epoxidverbindungen mit mehr als einer 1,2-Epoxidgruppe im Molekül und einem unteren Aufschmelzpunkt von >40°C, also Verbindungen, die diesen Charakteristika entsprechen, sind einmal Polyepoxidverbindungen, die bei 40°C und darunter fest sind, wobei darunter höhermolekulare Verbindungen (sogenannte Festharze) fallen, und solche, die infolge ihres symmetrischen Aufbaus bzw. der Größe der an die 1,2-Epoxidgruppe gebundenen Kohlenstoffsysteme fest sind und zum anderen solche, die durch Reaktion von flüssigen 1,2-Epoxidverbindungen mit mehr als einer Epoxidgruppe pro Molekül mit primären oder sekundären Aminen in solcher Menge hergestellt worden sind, daß das Addukt im Durchschnitt noch eine 1,2-Epoxidgruppe pro Molekül enthält.

Die 1,2-Epoxidverbindungen können sowohl gesättigt als auch ungesättigt sowie aliphatisch, cyclialiphatisch, aromatisch und heterocyclisch sein. Sie können weiterhin solche Substituenten enthalten, die unter den Mischungs- und Reaktionsbedingungen keine störenden Nebenreaktionen verursachen. Keine Nebenreaktionen rufen Alkyl- oder Arylsubstituenten, Äthergruppierungen und ähnliche hervor.

Von den Festharzen werden für diesen Anwendungszweck 1,2-Epoxidverbindungen mit mehr als einer Epoxidgruppe im Molekül bevorzugt, deren Epoxyäquivalentgewicht zwischen 500—2 000 liegt. Diese sind die festen, polymeren Polyglycidylpolyäther von 2,2-Bis-(4-hydroxyphenyl)-propan, die z.B. erhalten werden durch Reaktion von 2,2-Bis-(4-hydroxyphenyl)-propan mit Epichlorhydrin in Molverhältnissen von 1:9—1,2 (in Anwesenheit eines Alkalihydroxids im wässrigen Medium). Polymere Polyepoxide dieser Art können auch erhalten werden durch Umsetzung eines Polyglycidyläthers von 2,2-Bis-(4-hydroxyphenyl)-propan mit weniger als der äquimolekularen Menge an zweiwertigem Phenol, vorzugsweise in Anwesenheit eines Katalysators, wie eines tertiären Amins, eines tertiären Phosphins oder eines quaternären Phosphoniumsalzes. Das Polyepoxid kann auch ein fester epoxidierter Polyester sein, der beispielsweise erhalten wurde durch Umsetzung eines mehrwertigen Alkohols und/oder einer mehrbasischen Carbonsäure bzw. deren Anhydrid mit einem niedermolekularen Polyepoxid. Beispiele für derartige Polyepoxide mit niedrigem Molekulargewicht sind flüssige Diglycidyläther von 2,2-Bis(4-hydroxyphenyl)-propan, Diglycidylphthalat, Diglycidyladipat, Diglycidyltetrahydrophthalat, Diglycidylhexahydrophthalat, Diglycidylmaleat und der 3,4-Epoxycyclohexylmethylester von 3,4-Epoxycyclohexancarbonsäure.

Gemische aus festen Polyepoxiden können ebenfalls verwendet werden, z.B. ein Gemisch aus einem Polyepoxid, dessen Schmelzpunkt zwischen 120 und 160°C liegt und einem Polyepoxid mit einem Schmelzpunkt zwischen 60 und 80°C (Schmelzpunkt wird bestimmt nach der Quecksilbermethode von Durrans). Geeignete Mischungen enthalten zwischen 30 und 50 Gew.% eines festen Polyglycidyläthers von 2,2-Bis(4-hydroxyphenyl)-propan mit einem Epoxyäquivalentgewicht zwischen 1650 und 2050 und einem Schmelzpunkt von 120 bis 160°C und zwischen 50 und 70 Gew.% eines festen Polyglycidylpolyäthers von 2,2-Bis(4-hydroxyphenyl)-propan mit einem Epoxyäquivalentgewicht zwischen 450 und 525 und einem Schmelzpunkt von 60 bis 80°C.

Die erfindungsgemäß verwendeten, mit cyclischen Amidinen der beschriebenen allgemeinen Formel blockierten Polyisocyanate können durch Umsetzung bei Temperaturen von 0—150°C, vorzugsweise bei 80—120°C hergestellt werden, wobei die Polyisocyanate und die cyclischen Amidine in solchen Mengen eingesetzt werden, daß auf eine Isocyanatgruppe 0,5—1,1, vorzugsweise 0,8—1,0 Mol cyclisches Amiden kommen. Die angewendete Reaktionstemperatur sollte jedoch unterhalb der Aufspalttemperatur der Härter liegen. Die Reaktionsmischung wird zweckmäßigerweise solange auf den angegebenen Temperaturen gehalten, bis der NCO-Gehalt der Mischung auf Werte unter 0,2% abgefallen ist.

Die Umsetzung kann sowohl in Lösungsmitteln, in der Schmelze als auch in im Überschuß vorgelegten Polyisocyanat durchgeführt werden.

Als Ausgangsverbindungen, die zur Blockierung mit den cyclischen Amidinen eingesetzt werden können, eignen sich beispielsweise Polyisocyanate, insbesondere Diisocyanate, wie aliphatische, cycloaliphatische, araliphatische, d.h. arylsubstituierte aliphatische, und/oder aromatische Diisocyanate, wie sie beispielsweise in Houben-Weyl, Methoden der organischen Chemie, Band 14/2, S. 61—70 und dem Artikel von W. Siefken in Justus Liebigs Annalen der Chemie *562*, 75—136, beschrieben werden, wie 1,2-Äthylendiisocyanat, 1,4-Tetramethylendiisocyanat, 1,6-Hexamethylendiisocyanat, 2,2,4- bzw. 2,4,4-Trimethyl-1,6-hexamethylendiisocyanat (TMDI), 1,8-Diisocyanato-2,4-dimethyloctan, 1,9-Diisocyanato-5-methyl-nonan, 1,12-Dodecandiisocyanat, $\omega,\omega'$-Diisocyanatodipropyläther, Cyclobutan-1,3-diisocyanat, Cyclohexan-1,3- und 1,4-diisocyanat, 3-Isocyanatomethyl-3,5,5-trimethylcyclohexylisocyanat, welches auch als Isophorondiisocyanat bezeichnet und mit IPDI abgekürzt wird, 2,5- bzw. 2,6-Bis-(isocyanatomethyl)-bicyclo-[2.2.1]-heptan, Decahydro-8-methyl-1,4-methano-naphthalin-2 (oder 3) 5-ylendimethylen-diisocyanat, Hexahydro-4,7-methanoindan-1 (oder 2) 5 (oder 6) ylendimethylen-diisocyanat, Hexahydro-4-7-methanoindan-1-(oder 2) 5 (oder 6)-ylen-diisocyanat, Hexahydro-1,3-bzw. -1,4-phenyl-diisocyanat, 2,4- und 2,6-Hexahydrotoluylen-diisocyanat, Perhydro-2,4′ und/oder -4,4′ -diphenyl-methan-diisocyanat, $\omega,\omega'$-Diisocyanato-1,4-diäthyl-benzol, 1,4-Phenylendiisocyanat, 4,4′-Diisocyanato-diphenyl, 4,4′-Diisocyanato-3,3′-dichlor-diphenyl, 4,4′-Diisocyanato-3,3′-dimethoxy-diphenyl, 4,4′-Diisocyanato-3,3′-dimethyl-diphenyl, 4,4′-Diisocyanato-3,3′-diphenyl-diphenyl, 4,4′-Diisocyanato-diphenylmethan, Naphthylen-1,5-diisocyanat, Toluylendiisocyanate, Toluylen-2,4-bzw. 2,6- diisocyanat, N,N′-(4,4′-Dimethyl-3,3′-diisocyanatodiphenyl)-uretdion, m-Xylylen-diisocyanat, aber auch die Triisocyanate wie 2,4,4′-Triisocyanato-diphenyläther, 4,4′,4″-Triisocyanato-triphenylmethan, Tris-(4-isocyanatophenyl)-thiophosphat, sowie beliebige Gemische dieser Verbindungen. Weitere geeignete Isocyanate werden in dem genannten Artikel in den Annalen auf Seite 122 f beschrieben.

Besonders bevorzugt werden in der Regel die technisch leicht zugängigen aliphatischen, cycloaliphatischen oder aromatischen Diisocyanate und besonders das 3-Isocyanatomethyl-3,5,5-trimethyl-cyclohexylisocyanat und 2,4-Toluylendiisocyanat sowie deren isomere Gemische.

Neben den monomeren Polyisocyanaten können als Ausgangsstoffe für die Blockierung mit den nachstehend ausführlich beschriebenen cyclischen Amidinen, Imidazolinen und Tetrahydropyrimidinen selbstverständlich auch die dimeren und trimeren Formen der Polyisocyanate, wie Uretdione und Isocyanurate, eingesetzt werden, die nach bekannten Methoden herstellbar sind.

Unter Polyisocyanaten im Sinne der vorliegenden Erfindung werden auch solche verstanden, die vor der Blockierung mit den cyclischen Amidinen einer Umsetzung zur Molekülvergrößerung mit den in der Isocyanatchemie gebräuchlichen sogenannten Kettenverlängerungsmitteln, wie Wasser, Polyolen,

Polyaminen u.a., unterworfen wurden, wobei das bi- oder trifunktionelle Kettenverlängerungsmittel, also solche mit gegenüber Isocyanatgruppen reaktionsfähigen Gruppen, wie Hydroxyl- und/oder Aminogruppen tragende Verbindungen, in solchen Mengen verwendet wird, daß das resultierende neue Isocyanat im Durchschnitt mindestens 2 Isocyanatgruppen trägt. Bei Verwendung von Wasser als Kettenverlängerungsmittel resultieren Polyisocyanate mit einer oder mehreren Harnstoffgruppierungen.

Geeignete Polyole sind beispielsweise Diole und Triole, wie des Molekulargewichtsbereichs 60—250, z.B. Äthylenglykol, Propylenglykole, wie 1,2- und 1,3-Propandiol, 2,2-Dimethylpropandiol-(1,3), Butandiole, wie Butandiol-(1,4), Hexandiole, z.B. Hexandiol-(1,6), 2,2,4-Trimethylhexandiol-(1,6), 2,4,4-Trimethylhexandiol-(1,6), Heptandiol-(1,7), Octadecen-9,10-diol-(1,12), Thiodiglykol, Octadecandiol-(1,18), 2,4-Dimethyl-2-propylheptandiol-(1,3), Buten- oder Butindiol-(1,4), Diäthylenglykol, Triäthylenglykol, trans- und cis-1,4-Cyclohexandimethanol, 1,4-Cyclohexandiol, Glycerin, Hexantriol-(1,2,6), 1,1,1-Trimethylolpropan, 1,1,1-Trimethyloläthan u.a. Es können auch Mischungen der vorgenannten Verbindungen verwendet werden.

Von den für die Kettenverlängerung bzw. Molekülvergroßerung geeigneten Polyaminen sollen beispielsweise das Äthylendiamin-1,2, Propylendiamin-1,2 und 1,3, Butylendiamin-1,2 -1,3 und -1,4 sowie die Hexamethylendiamine, die eine oder mehrere $C_1$—$C_4$-Alkylreste sein können, wie 2,2,4- bzw. 2,4,4-Trimethylhexamethylendiamin-1,6 u.a., und 3-Aminomethyl-3,5,5-trimethyl-cyclohexylamin, welches auch als IPD bezeichnet wird, genannt werden.

Die geeigneten Imidazolin- und Tetrahydropyrimidin-Derivate im Sinne der vorliegenden Erfindung, die der früher beschriebenen allgemeinen Formel entsprechen, sind beispielsweise solche mit gegebenenfalls arylsubstituierten Alkylresten oder mit gegebenenfalls alkylsubstituierten Arylresten, wie 2-Methylimidazolin, 2,4-Dimethylimidazolin, 2-Methyl-4-(n-butyl)-imidazolin, 2-Äthylimidazolin, 2-Äthyl-4-methyl-imidazolin, 2-Benzyl-imidazolin, 2-Phenyl-imidazolin, 2-Phenyl-4-methyl-imidazolin, 2-Phenyl-4-(N-morpholinylmethyl)-imidazolin, 2-(o-Tolyl)-imidazolin, 2-(p-Tolyl)-imidazolin bzw. 2-Methyltetrahydropyrimidin, 2,4-(5 oder 6), Dimethyltetrahydropyrimidin, 2-Äthyltetrahydropyrimidin, 2-Äthyl-4-methyl-tetrahydropyrimidin, 2-Benzyl-tetrahydropyrimidin, 2-Phenyl-tetrahydropyrimidin, 2-Phenyl-4 (5 oder 6)-methyl-tetrahydropyrimidin, 2,4-Diaza-3-phenyl-7,9,9-(oder 7,7,9)-trimethylbicyclo-4.3.0-nonen-(2), 2,4-Diaza-3-methyl-7,9,9-(oder 7,7,9)-trimethyl-bicyclo-[4,3,0]-nonen-(2) u.a.m. Es können auch Gemische der cyclischen Amidine erfindungsgemäß eingesetzt werden. Dieses ist besonders dann zweckmäßig, wenn blockierte Isocyanate mit niedrigen Schmelzpunkten bzw. -bereichen benötigt werden.

Die erfindungsgemäß einsetzbaren Imidazolin- und Tetrahydropyrimidin-Derivate können nach bekannten Verfahren aus gegebenenfalls substituierten 1,2- bzw. 1,3-Diaminen und beispielsweise aliphatischen oder aromatischen Mononitrilen in Gegenwart von elementarem Schwefel oder Sulfurylchlorid als Katalysator hergestellt werden.

Die Blockierung kann, wie bereits erwähnt, auch in Lösungsmitteln durchgeführt werden. Als Lösungsmittel für diese Reaktion kommen nur solche infrage, die mit den Polyisocyanaten nicht reagieren, beispielsweise Ketone, wie Aceton, Methyläthylketon, Methylisobutylketon, Cyclopentanon, Cyclohexanon u.a.; Aromaten, wie Benzol, Toluol, Xylole, Chlorbenzol, Nitrobenzol u.a.; cyclische Äther, wie Tetrahydrofuran, Dioxan u.a.; Ester, wie Methylacetat, n-Butylacetat u.a.; aliphatische Chlorkohlenwasserstoffe, wie Chloroform, Tetrachlorkohlenstoff u.a.; sowie aprotische Lösungsmittel, wie Dimethylformamid, Dimethylacetamid, Dimethylsulfoxid usw.

Wenn das Blockierungsmittel im Verhältnis von $\geqq 1$ zur Anzahl der Isocyanatgruppen eingesetzt wird, werden die Reaktionsmischungen so lange bei den angegebenen Temperaturen gehalten, bis der NCO-Gehalt der Reaktionsmischung auf Werte unter 0,2% NCO abgesunken ist, ansonsten bis zur Erreichung eines konstanten NCO-Wertes.

Ebenfalls erfindungsgemäß einsetzbar sind solche blockierten Polyisocyanate, die durch nachträgliche Umsetzung einer Gruppe von blockierten Polyisocyanaten erhalten werden können, nämlich solche, bei denen cyclische Amidine in unterstöchiometrischen Mengen eingesetzt worden sind, d.h. das Verhältnis cyclisches Amidin zu Isocyanatgruppen war $<1:1$, mit den gleichen Kettenverlängerungsmitteln, die bereits früher als Mittel zur Molekülvergrößerung beschrieben worden sind. Die Umsetzung erfolgt ebenfalls bei Temperaturen im Bereich von 0—150°C, vorzugsweise 80—120°C, jedoch unterhalb der Deblockierungstemperatur des blockierten Polyisocyanats. Durch diese blockierten Polyisocyanate lassen sich Überzugsmittel herstellen, die in sehr weiten Grenzen praktische Erfordernisse abdecken. Diese Verfahrensvariante ist besonders von Interesse für Polyisocyanate mit unterschiedlich reaktiven NCO-Gruppen.

So lassen sich durch Wechsel der Reihenfolge Adduktbildung/Blockierung blockierte Polyisocyanate mit unterschiedlicher Reaktivität, Schmelzbereich und Struktur erhalten.

Bei Blockierung von mit 2-wertigen Kettenverlängerungsmitteln verlängerten Diisocyanaten werden Verbindungen erhalten, die durch die nachstehende allgemeine Formel beschrieben werden können.

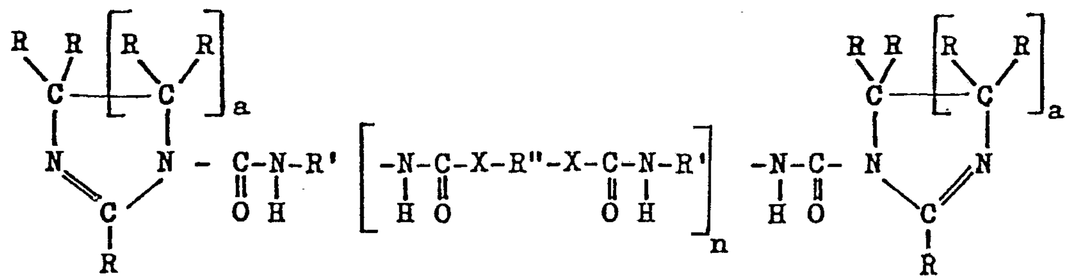

In der vorstehenden allgemeinen Formel können bedeuten: a und R die vorstehende Bedeutung und n 0 oder 1, X, O, S oder eine NH-Gruppe, R′ einen gleichen oder verschiedenen, gegebenenfalls alkylsubstituierten Alkylen-, Cycloalkylen- oder Arylenrest und R″ ein gegebenenfalls durch eine oder mehrere Alkylreste, wobei mehrere auch Bestandteil eines cycloaliphatischen Ringes sein können, substituierter, gesättigter oder ungesättigter Alkylenrest mit 2—18 C-Atomen, der gegebenenfalls ein oder mehrere Sauerstoff- oder Schwefelatome in der Kohlenwasserstoffkette enthalten kann, oder ein gegebenenfalls alkylsubstituierter Arylen- oder Cycloalkylenrest ist.

Die Menge des als Härtungsmittel eingesetzten, mit einem cyclischen Amidin blockierten Polyisocyanats kann bemerkenswerterweise in weiten Grenzen variiert werden. Man erhält bereits ausgezeichnete Resultate bei Verwendung von 2—15 Gew.T., vorzugweise 6—12 Gew.T. Härtungsmittel, bezogen auf 100 Gew.T. der eingesetzten festen 1,2-Epoxidverbindung.

Gegenüber den Pulverlacken, die mit Imidazolin blockierten Polyisocyanaten gehärtet werden, besitzen die Überzugsmittel mit blockierten Polyisocyanathärtern, bei denen gemischte Imidazolin-Tetrahydropyrimidin-Derivate oder nur Tetrahydropyrimidine als Blockierungsmittel verwendet wurden, den Vorteil, daß sie noch reaktionsfähiger sind als die ersten. Man kommt daher mit dieser Härtergruppe gegebenenfalls mit kürzeren Einbrennzeiten aus, bzw. man kann die Härtung bei etwas niedrigeren Temperaturen durchführen.

Die Lagerstabilität bei Zimmertemperatur der neuen Überzugsmittel mit Imidazolinen oder Tetrahydropyrimidinen blockierten Polyisocyanaten als Härter ist ausgezeichnet.

Zur Verbesserung der Verlaufeigenschaften der Lacke werden bei der Zubereitung sogenannte Verlaufmittel zugesetzt. Bei diesen Mitteln kann es sich um chemische Verbindungen bzw. deren Gemischen sehr unterschiedlicher chemischer Art handeln, z.B. polymeren oder monomeren Verbindungen, Acetale, wie
Polyvinylformal, Polyvinylacetal, Polyvinylbutyral, Polyvinylacetobutyral bzw.
Di-2-äthylhexyl-i-butyraldehyd-acetal,
Di-2-äthylhexyl-n-butyraldehyd-acetal,
Diäthyl-2-äthylhexanol-acetal,
Di-n-butyl-2-äthyl-hexanol-acetal,
Di-i-butyl-2-äthylhexanol-acetal,
Di-2-äthylhexyl-acetaldehyd-acetal u.a.,

Äther, wie die polymeren Polyäthylen- und Polypropylenglykole, Mischpolymerisate aus n-Butylacrylat und Vinylisobutyläther, Keton-Aldehyd-Kondensationsharze, feste Siliconharze oder auch Gemische von Zinkseifen, von Fettsäuren und aromatischen Carbonsäuren u.ä. Derartige Verlaufmittel können in den Ansätzen in Mengen von 0,2—5,0 Gew.%, bezogen auf die Gesamtmenge des Pulverlackes, enthalten sein.

Die anderen Bestandteile des heißhärtbaren Pulverlackgemisches, wie Pigmente, Farbstoffe, Füllstoffe, Thixotropiermittel, UV- und Oxidationsstabilisatoren, u.a. können, bezogen auf die Menge an 1,2-Epoxidverbindungen, innerhalb eines weiten Bereichs schwanken.

Weiterer Gegenstand der Erfindung ist die Herstellung des pulverförmigen Überzugsmittels, in dem man die festen 1,2-Epoxidverbindungen und die Härtungsmittel, gegebenenfalls nach Zugabe der genannten Lackzusätze, in den genannten Mengenverhältnissen mischt und mindestens 30°C unterhalb der Aufspalttemperatur des Härtungsmittels extrudiert und anschließend auf eine Korngröße kleiner als 0,25 mm, vorzugsweise $<0,1$ mm und einem Korngrößenmaximum zwischen 0,02 und 0,06 mm, vorzugsweise zwischen 0,03 und 0,05 mm, mahlt und gegebenenfalls die gröbere Fraktion durch Siebung entfernt.

Die Aufbringung des Pulverlacks auf die zu überziehenden Körper kann nach bekannten Methoden, z.B. elektrostatisches Pulverspritzen, Wirbelsintern, elektrostatisches Wirbelsintern etc., geschehen.

Nach dem Aufbringen des Pulverlacks nach einer der beschriebenen Methoden auf die zu lackierenden Gegenstände werden sie zur Aushärtung auf Temperaturen oberhalb der Aufspalttemperatur des Härtungsmittels, d.h. 130—200°C, vorzugsweise 140—180°C, erhitzt. Danach besitzt der resultierende Überzug die beschriebenen Vorteile.

Es ist auch möglich, daß man die Pülverlacke gemäß Anspruch 5 und 6 auf vorher erhitzte Metalle aufbringt.

Zur Beschichtung mit den erfindungsgemäßen pulverförmigen Überzugsmitteln eignen sich alle Substrate, die die angegebenen Härtungstemperaturen ohne Einbuße der mechanischen Eigenschaften vertragen, wie Metallflächen, Glasflächen u.ä.

Die erfindungsgemäßen pulverförmigen Überzugsmittel und deren Anwendung werden durch die nachstehenden Beispiele illustriert:

Beispiel 1

*1 a.* Blockiertes Polyisocyanat:

Zu einer mischung aus 222 Gew.-Teilen Isophorondiisocyanat (IPDI) und 300 Gew.-Teile wasserfreiem Aceton wurden bei Raumtemperatur langsam 292 Gew.-Teile 2-Phenylimidazolin, die in 500 Gew.-Teilen wasserfreiem Aceton gelöst waren, zugetropft. Nach Beendigung der 2-Phenylimidazolinzugabe wurde eine Stunde bei 50°C erhitzt. Das Aceton wurde anschließend abdestilliert. Die letzten Reste an Aceton wurden durch Trocknung des Reaktionsproduktes bei 60°C im Vakuumtrockenschrank entfernt. Das mit 2-Phenylimidazolin blockierte IPDI stellt ein weißes Pulver mit einem Schmelzbereich von 98—106°C, einem Erweichungspunkt (DTA) von 63—80°C und einem Gehalt an freiem Isocyanat von < 0,2 Gew.% dar.

*1 b.* 1,2-Epoxidverbindung:

In diesem und allen weiteren Beispielen wurde eine 1,2-Epoxidverbindung auf Basis eines Adduktes aus 2,2-Bis-(4-hydroxy-phenyl)-propan (Dian) und Epichlorhydrin verwendet, welches einer HCl-Abspaltung unterworfen und anschließend mit weiterem Dian umgesetzt wurde und welches nach Angabe des Herstellers ein Epoxid-Äquivalentgewicht von 900—1000, einen Epoxidwert von 0,10—0,11, einen Hydroxylwert von 0,34 und einen Schmelzbereich von 96—104°C besaß.

*1 c.* Pigmenthaltiges pulverförmiges Überzugsmittel:

Die gemahlenen Produkte 1,2-Epoxidverbindung mit 2-Phenylimidazolin blockiertes IPDI und Verlaufmittel-Masterbatch wurden mit dem Weißpigment ($TiO_2$) in einem Kollergang innig vermischt und anschließend im Extruder bei 90—100°C homogenisiert. Nach dem Erkalten wurde das Extrudat gebrochen und mit einer Stiftmühle auf eine Korngröße < 0,1 mm gemahlen. Das so hergestellte Pulver wurde mit einer elektrostatischen Pulverspritzanlage bei 60 kV auf entfettete Eisenbleche appliziert und in einem Umlufttrockenschrank eingebrannt.

Das Expoxid gemäß Beispiel 1b wurde mit wechselnden Mengen der blockierten Isocyanatkomponente gemäß Beispiel 1a umgesetzt.

Zusammensetzung der pulverförmigen Uberzugsmittel:

| | $C_1$ | $C_2$ | $C_3$ | Gew.–T. |
|---|---|---|---|---|
| Epoxid gemäß 1b | 1297,5 | 1261,5 | 1227,5 | ,, |
| Verlaufmittel-Masterbatch* | 125,0 | 125,0 | 125,0 | ,, |
| blockiertes IPDI gemäß 1a | 77,5 | 113,5 | 147,5 | ,, |
| Weißpigment ($TiO_2$) | 1000,0 | 1000,0 | 1000,0 | ,, |

*10 Gew.% eines Verlaufsmittels auf der Basis von Polyacrylaten, das im Handel unter der Bezeichnung Modaflow® erhältlich ist, in 1,2-Epoxidverbindungen gemäß 1b.

Der pigmentierte Pulverlack gemäß $1c_1$ wurde zwischen 180° und 200°C gehärtet.
Die mechanischen Eigenschaften der erhaltenen Lackfilme zeigt die nachstehende Tabelle:

| Einbrenn-bedingungen | Mechanische Eigenschaften | | | | | | |
|---|---|---|---|---|---|---|---|
| Zeit/Temp. | SD | HK | HB | ET | GS | Imp. rev. | GG 60° |
| 15 min/200°C | 60–95 | 193 | 100 | 5–7 | 0 | 145 | 92 |
| 20 min/200°C | 80–120 | 205 | 100 | 6–7 | 0 | 23 | 93 |
| 25 min/200°C | 75–95 | 200 | 111 | 7–8 | 0 | 94 | 90 |

| Einbrenn-bedingungen | Mechanische Eigenschaften | | | | | | |
|---|---|---|---|---|---|---|---|
| Zeit/Temp. | SD | HK | HB | ET | GS | Imp. rev. | GG 60° |
| 30 min/190°C | 75–105 | 214 | 91 | 7,5–8,5 | 0 | 94 | 89 |
| 35 min/180°C | 80–95 | 211 | 100 | 7,5–8 | 0 | 94 | 94 |

Die Abkürzungen in dieser und den folgenden Tabellen bedeuten:

SD = Schichtdicke (in $10^{-3}$ mm)
HK = Härte nach König (in sec) (nach DIN 53 157)
HB = Härte nach Buchholz (nach DIN 53 153)
ET = Tiefung nach Erichsen (in mm) (nach DIN 53 156)
GS = Gitterschnittprüfung (nach DIN 53 151)
GG 60° = Messung des Glanzes nach Gardner (nach ASTM–D–523)
Imp. rev. = Impact reverse (in cm.kg)

Das pigmentierte pulverförmige Überzugsmittel gemäß $1c_2$ wurde zwischen 150°C und 200°C gehärtet. Die erhaltenen Werte zeigt die nachstehende Tabelle.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 8 min/200°C | 60 | 175 | 83 | 7,5–8,5 | 0 | >94 | 90 |
| 10 min/200°C | 50 | 181 | 91 | 8–8,9 | 0 | >94 | 91 |
| 12 min/200°C | 40–65 | 177 | 111 | 8–8,5 | 0 | >94 | 94 |
| 15 min/200°C | 40–60 | 185 | 100 | 8–8,5 | 0 | >94 | 93 |
| 8 min/190°C | 60–70 | 177 | 111 | 7–8 | 0 | >94 | 95 |
| 10 min/190°C | 50–60 | 178 | 100 | 7,5–8,5 | 0 | >94 | 92 |
| 12 min/190°C | 50–65 | 183 | 100 | 8–8,5 | 0 | >94 | 93 |
| 14 min/190 °C | 60–80 | 178 | 100 | 8,4 | 0 | >94 | 92 |
| 20 min/190°C | 50–70 | 177 | 100 | 7,9–8,5 | 0 | >94 | 93 |
| 12 min/180°C | 70–80 | 192 | 100 | 7,5–8 | 0 | >94 | 93 |
| 14 min/180°C | 70–80 | 191 | 100 | 7,5–8 | 0 | >94 | 94 |
| 16 min/180°C | 60–80 | 189 | 100 | 7,5–8 | 0 | >94 | 95 |
| 20 min/180°C | 70–90 | 190 | 100 | 7,6–8 | 0 | >94 | 93 |
| 12 min/170°C | 90 | 198 | 111 | 8,2 | 0 | >94 | 95 |
| 14 min/170°C | 70 | 193 | 100 | 7,7 | 0 | >94 | 93 |
| 16 min/170°C | 90 | 197 | 100 | 8,1 | 0 | >94 | 93 |
| 25 min/160°C | 70–90 | 192 | 91 | 7,5–8 | 0 | 69 | 90 |
| 40 min/150°C | 60–90 | 201 | 91 | 7–7,5 | 0 | >94 | 93 |

Die bei 180°C innerhalb von 12 min. eingebrannten Lackfilme wurden dem Kochwassertest unterworfen und zeigten nach 24 h keinen Angriff; der Abrieb mit dem Taber-Abraser (1000 U/min, 1000 g, Rollentyp CS 17) lag bei 35—40 mg. Der Gewichtsverlust war wesentlich geringer als bei Filmen, die mit ε-Caprolactam blockierten Diisocyanaten hergestellt worden waren, da das als Blockierungsmittel verwendete 2-Phenylimidazolin noch mit den 1,2-Epoxidgruppen reagierte.

Das pigmentierte pulverförmige Überzugsmittel gemäß 1$c_3$ wurde zwischen 150°C und 200°C eingebrannt. Die erhaltenen Werte zeigt die nachstehende Tabelle.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 4 min/200°C | 40–60 | 171 | 100 | 6,8 | 0 | >94 | 90 |
| 6 min/200°C | 70–80 | 173 | 125 | 7,4 | 0 | >94 | 90 |
| 8 min/200°C | 55 | 176 | 111 | 7,7 | 0 | >94 | 91 |
| 10 min/200°C | 60 | 173 | 100 | 8,2 | 0 | >94 | 90 |
| 12 min/200°C | 50–60 | 170 | 111 | 7,5 | 0 | >94 | 91 |
| 6 min/190°C | 60–80 | 181 | 83 | 6,9 | 0 | >94 | 92 |
| 8 min/190°C | 50–70 | 178 | 100 | 7,8 | 0 | >94 | 90 |
| 10 min/190°C | 55–60 | 179 | 100 | 7,6 | 0 | >94 | 89 |
| 12 min/190°C | 60–70 | 176 | 100 | 7,0 | 0 | >94 | 91 |
| 14 min/190°C | 60 | 170 | 111 | 7,6 | 0 | >94 | 91 |
| 8 min/180°C | 60–80 | 183 | 83 | 6,8 | 0 | >94 | 93 |
| 10 min/180°C | 50–70 | 185 | 91 | 7,1 | 0 | >94 | 92 |
| 12 min/180°C | 65–70 | 176 | 91 | 7,1 | 0 | >94 | 93 |
| 14 min/180°C | 70–80 | 172 | 91 | 7,6 | 0 | >94 | 91 |
| 10 min/170°C | 65 | 189 | 125 | 7,5 | 0 | >94 | 95 |
| 12 min/170°C | 45 | 180 | 100 | 8,1 | 0 | >94 | 90 |
| 14 min/170°C | 60 | 177 | 100 | 7,8 | 0 | >94 | 89 |
| 14 min/160°C | 70–80 | 197 | 83 | 7,9 | 0 | >94 | 89 |
| 16 min/160°C | 55 | 182 | 83 | 7,1 | 0 | >94 | 93 |
| 18 min/160°C | 90–100 | 176 | 83 | 7,1 | 0 | >94 | 92 |
| 16 min/150°C | 60 | 175 | 100 | 6,7 | 0 | >94 | 90 |
| 18 min/150°C | 60 | 186 | 91 | 6,0 | 0 | >94 | 95 |

Auch diese Lackfilme, die bei 180°C innerhalb 12 min. gehärtet wurden, zeigten eine ausgezeichnete Kochwasserfestigkeit, geringen Abrieb und geringen Gewichtsverlust.

Beispiel 2

*2 a.* Herstellung des Diäthylenglykoladduktes des IPDI:

Zu 444 Gew.-T. IPDI wurden bei 80°C unter guter Rührung 106 Gew.-T. Diäthylenglykol langsam

zugegeben. Nach erfolgter Diäthylenglykolzugabe wurde noch 2h bei 80°C erhitzt. Der NCO-Gehalt des IPDI/Diäthylenglykol-Gemisches betrug dann 15,1%.

*2 b.* Blockiertes Polyisocyanat:
Zu 550 Gew.-T. des gemäß 2a hergestellten Adduktes aus 2 Molen IPDI und 1 Mol Diäthylenglykol wurden bei 120°C portionsweise 292 Gew.T. 2-Phenylimidazolin so zugegeben, daß die Temperatur nicht über 125°C anstieg. Nach Beendigung der 2-Phenylimidazolinzugabe wurde das Reaktionsgemisch noch eine Stunde bei 120°C erhitzt. Das Reaktionsprodukt stellt ein blaßgelbes Pulver mit einem Schmelzbereich 103—110°C, einem Erweichungspunkt (DTA) von 70—90°C und einem freien NCO-Gehalt von 0,2% dar.

*2 c.* 1,2-Epoxidverbindung:
Es wurde das in Beispiel 1b beschriebene Epoxid eingesetzt.

*2 d.* Pigmentiertes, pulverförmiges Überzugsmittel:
Gemäß Beispiel 1c wurden zwei pigmentierte Pulverlacke mit folgenden Rezepturen hergestellt, appliziert und eingebrannt:

| | $d_1$ | $d_2$ | |
|---|---|---|---|
| Epoxid gemäß 1b | 1252 | 1198 | Gew.-T. |
| Verlaufmittel-Masterbatch gem. 1c | 125 | 125 | Gew.-T. |
| Weißpigment ($TiO_2$) | 1000 | 1000 | Gew.-T. |
| blockiertes IPDI gemäß 2b | 123 | 177 | Gew.-T. |

Das pigmentierte pulverförmige Überzugsmittel gemäß Beispiel $2d_1$ wurde zwischen 180°C und 200°C gehärtet. Die Eigenschaften der erhaltenen Lackfilme zeigt die nachstehende Tabelle.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 18 min/200°C | 60–90 | 201 | 91 | 6,3 | 0 | 69 | 93 |
| 20 min/200°C | 90–100 | 203 | 91 | 7,4–7,9 | 0 | >94 | 91 |
| 25 min/200°C | 90–100 | 205 | 91 | 7,7–8,4 | 0 | >94 | 94 |
| 20 min/190°C | 60–90 | 207 | 83 | 5,5–7,5 | 0 | 34,5 | 91 |
| 25 min/190°C | 55–65 | 212 | 91 | 6–8,1 | 0 | 69 | 94 |
| 30 min/190°C | 70–90 | 202 | 100 | 7,6–8,6 | 0 | >94 | 92 |
| 30 min/180°C | 65–90 | 201 | 83 | 5,5–6 | 0 | 47 | 91 |
| 35 min/180°C | 110 | 205 | 91 | 6–7,1 | 0 | 80,5 | 93 |

Das pigmentierte pulverförmige Überzugsmittel gemäß Beispiel $2d_2$, das zwischen 160°C und 200°C gehärtet wurde, zeigte wesentlich verbesserte Elastizität, hervorgerufen durch 50%ige Erhöhung des Vernetzeranteils. Die ermittelten mechanischen Eigenschaften der Lackfilme zeigt die nachstehende Tabelle.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 10 min/200°C | 60–80 | 180 | 83 | 5,6–6,0 | 0 | 57.5 | 82 |
| 12 min/200°C | 60–70 | 187 | 83 | 5,6–6,3 | 0 | >94 | 79 |
| 15 min/200°C | 50–75 | 182 | 91 | 5,7–6,5 | 0 | >94 | 83 |
| 20 min/200°C | 60–90 | 180 | 91 | 5,7–6,8 | 0 | >94 | 84 |
| 12 min/190°C | 60–75 | 179 | 83 | 4,9–5,5 | 0 | 80,5 | 83 |
| 14 min/190°C | 65 | 182 | 83 | 5,0–5,6 | 0 | >94 | 8[illegible] |
| 20 min/190°C | 50–70 | 179 | 83 | 5,5–5,8 | 0 | >94 | 82 |
| 25 min/190°C | 60–70 | 185 | 91 | 5,5–6,1 | 0 | >94 | 84 |
| 14 min/180°C | 70–80 | 184 | 100 | 5,6–6,1 | 0 | 57,5 | 81 |
| 16 min/180°C | 75–90 | 182 | 91 | 6,5–6,8 | 0 | >94 | 83 |
| 20 min/180°C | 65 | 180 | 100 | 6,8–7,0 | 0 | >94 | 82 |
| 25 min/180°C | 70–80 | 183 | 100 | 6,3–6,9 | 0 | >94 | 80 |
| 18 min/170°C | 50–60 | 181 | 100 | 6,1–6,5 | 0 | >94 | 81 |
| 20 min/170°C | 70–90 | 183 | 91 | 6,7–7,0 | 0 | >94 | 84 |
| 25 min/160°C | 40–70 | 183 | 100 | 4,5–5,8 | 0 | >94 | 83 |
| 35 min/150°C | 80–110 | 181 | 100 | 4,5–5,5 | 0 | 80,5 | 82 |

## Beispiel 3

*3 a.* Blockiertes Polyisocyanat:

Zu einer Schmelze von 320 Gew.-T. 2-Phenyl-4-methylimidazolin wurden 222 Gew.-T. IPDI so zugetropft, daß die Temperatur im Reaktionskolben nicht über 120°C steigt. Zur Vervollständigung der Reaktion wurde die Reaktionsmischung 3h bei 120°C gehalten. Diese Bedingungen reichen für eine nahezu vollständige Umsetzung. Das Reaktionsprodukt ist ein weißes kristallines Pulver mit einem Schmelzbereich von 95—103°C, einem Erweichungspunkt (DTA) von 65—85°C und einem freien NCO-Gehalt <0,1%.

*3 b.* 1,2-Epoxidverbindung:

Es wurde das in Beispiel 1b beschriebene Epoxid eingesetzt.

*3 c.* Pigmentiertes, pulverförmiges Überzugsmittel:

Gemäß Beispiel 1c wurden zwei pigmentierte Pulverlacke mit folgenden Rezepturen hergestellt, appliziert und eingebrannt.

| | $C_1$ | $C_2$ | |
|---|---|---|---|
| Epoxid gemaβ 1b | 1272,5 | 1226,4 | Gew.–T. |
| Verlaufmittel-Masterbatch gem. 1c | 125,0 | 125,0 | Gew.–T. |
| Blockiertes IPDI gemaβ 3a | 102,5 | 148,6 | Gew.–T. |
| Weiβpigment ($TiO_2$) | 1000,0 | 1000,0 | Gew.–T. |

Das pigmentierte, pulverförmige Überzugsmittel gemäß Beispeil $3c_1$ wurde zwischen 170°C und 200°C eingebrannt. Die bestimmten mechanischen Eigenschaften der Lackfilme gibt die nachstehende Tabelle wieder.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 12 min/200°C | 50–110 | 187 | 100 | 6,7–7,2 | 0 | 80,5 | 92 |
| 14 min/200°C | 60–75 | 183 | 100 | 7,2–7,6 | 0 | >94 | 94 |
| 16 min/200°C | 70–90 | 186 | 100 | 7,1–7,9 | 0 | >94 | 93 |
| 14 min/190°C | 105–115 | 181 | 100 | 5,9–7,2 | 0 | 57,5 | 90 |
| 16 min/190°C | 70–85 | 183 | 100 | 6,3–7,5 | 0 | >94 | 93 |
| 18 min/190°C | 55–90 | 184 | 100 | 6,5–7,3 | 0 | >94 | 92 |
| 16 min/180°C | 80–115 | 188 | 100 | 5,1–5,6 | 0 | 47 | 91 |
| 18 min/180°C | 70–95 | 183 | 100 | 5,5–6,3 | 0 | 80,5 | 90 |
| 20 min/180°C | 60–90 | 182 | 100 | 5,9–6,9 | 0 | >94 | 93 |
| 20 min/170°C | 70–95 | 183 | 100 | 5,1–5,9 | 0 | 57,5 | 92 |
| 25 min/170°C | 85–110 | 181 | 91 | 6,0–6,5 | 0 | >94 | 90 |

Der pigmentierte Lack gemäß $3c_2$, der zwischen 170 und 200°C eingebrannt wurde, zeigt wesentlich verbesserte Elastizität, hervorgerufen durch eine etwa 50%ige Erhöhung des Vernetzeranteils.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 10 min/200°C | 50–90 | 186 | 100 | 6,7–7,5 | 0 | 92,5 | 92 |
| 12 min/200°C | 65–95 | 185 | 91 | 6,9–7,7 | 0 | >94 | 91 |
| 14 min/200°C | 70–100 | 187 | 100 | 6,8–7,9 | 0 | >94 | 93 |
| 16 min/200°C | 65–110 | 185 | 100 | 6,7–8,0 | 0 | >94 | 91 |
| 12 min/190°C | 60–80 | 184 | 91 | 6,5–7,3 | 0 | >94 | 93 |
| 14 min/190°C | 70–80 | 182 | 100 | 6,7–7,5 | 0 | >94 | 91 |
| 16 min/190°C | 55–95 | 187 | 100 | 6,8–7,6 | 0 | >94 | 94 |
| 18 min/190°C | 75–105 | 183 | 100 | 6,5–7,8 | 0 | >94 | 91 |
| 14 min/180°C | 60–70 | 181 | 100 | 6,1–7,2 | 0 | 92,5 | 91 |
| 16 min/180°C | 70–90 | 187 | 100 | 6,3–7,4 | 0 | >94 | 95 |
| 18 min/180°C | 50–80 | 185 | 100 | 6,2–7,6 | 0 | >94 | 93 |

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 18 min/170°C | 60–100 | 184 | 91 | 6,0–6,9 | 0 | 80,5 | 90 |
| 20 min/170°C | 70–90 | 188 | 100 | 6,4–7,3 | 0 | >94 | 93 |

Beispiel 4

*4 a.* Blockiertes Polyisocyanat:

Zu 550 Gew.-T. des im Beispiel 2a beschriebenen IPDI/Diäthylenglykol-Adduktes wurden bei 100°C 320 Gew.-T. 2-Phenyl-4-methyl-imidazolin so zugegeben, daß die Temperatur des Reaktionsgemisches nicht über 110°C anstieg. Zur Vervollständigung der Reaktion wurde das Reaktionsgemisch noch 2 Stunden bei 110°C erhitzt. Das Reaktionsprodukt stellt ein weißes Pulver mit einem Schmelzbereich von 95—100°C und einem Erweichungspunkt (DTA) von 65—95°C dar. Im Reaktionsprodukt konnte kein NCO mehr nachgewiesen werden.

*4 b.* 1,2-Epoxidverbindung:

Es wurde das in Beispiel 1b beschriebene Epoxid eingesetzt.

*4 c.* Pigmentiertes, pulverförmiges Überzugsmittel:

Entsprechend Beispiel 1c wurde ein pigmentierter Pulverlack hergestellt, appliziert und eingebrannt.

| | | |
|---|---|---|
| Epoxid gemäß 1d: | 1217,5 | Gew.-T. |
| Verlaufmittel-Masterbatch gemäß 1c: | 125,0 | Gew.-T. |
| Blockiertes IPDI gemäß 4a: | 157,5 | Gew.-T. |
| Weißpigment ($TiO_2$): | 1000,0 | Gew.-T. |

Dieser pigmentierte Pulverlack wurde dann zwischen 170°C und 200°C eingebrannt. Die mechanischen Werte der erhaltenen Lackfilme gibt die nachstehende Tabelle wieder.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 12 min/200°C | 50–80 | 181 | 100 | 7,5–8,5 | 0 | 80,5 | 96 |
| 14 min/200°C | 80–115 | 179 | 125 | 7,7–8,5 | 0 | >94 | 99 |
| 16 min/200°C | 70–105 | 180 | 111 | 7,6–8,7 | 0 | >94 | 94 |
| 14 min/190°C | 75–80 | 178 | 100 | 8,4–8,6 | 0 | 80,5 | 95 |
| 16 min/190°C | 65–90 | 179 | 111 | 8,4–8,7 | 0 | >94 | 97 |
| 18 min/190°C | 60–100 | 181 | 100 | 8,3–8,8 | 0 | >94 | 96 |
| 16 min/180°C | 60–105 | 177 | 100 | 8,5–8,8 | 0 | 80,5 | 100 |
| 18 min/180°C | 60–95 | 179 | 111 | 8,4–8,9 | 0 | >94 | 99 |
| 20 min/180°C | 70–100 | 178 | 100 | 8,3–8,8 | 0 | >94 | 97 |
| 20 min/170°C | 75–80 | 183 | 100 | 7,8–8,3 | 0 | >94 | 98 |
| 25 min/170°C | 70–90 | 181 | 111 | 7,8–8,6 | 0 | >94 | 99 |

Bei Erhöhung des Vernetzeranteils erzielt man auch mit 2-Phenyl-4-methyl-imidazolin blockiertem IPDI-Diäthylenglykol-Addukt eine höhere Elastizität bei gleichzeitiger Senkung der Härtungstemperaturen bzw. -zeiten.

## Beispiel 5

*5 a.* Blockiertes Polyisocyanat:

Zu 222 Gew.-T. IPDI wurden bei 80°C 196 Gew.-T. 2,4-Dimethylimidazolin so zugetropft, daß die Temperatur nicht über 90°C steigt. Nach beendeter 2,4-Dimethylimidazolin-Zugabe wurde der Ansatz noch eine weitere Stunde bei 100°C gehalten. Das Reaktionsprodukt stellt ein farbloses Pulver mit einem Schmelzbereich von 104—110°C und einem Erweichungspunkt (DTA) von 82—95°C dar. Im Reaktionsprodukt konnte kein —NCO mehr nachgewiesen werden.

*5 b.* Epoxidverbindung:

Es wurde das in Beispiel 1b beschriebene Epoxid eingesetzt.

*5 c.* Pigmentiertes, pulverförmiges Überzugsmittel:

Gemäß Beispiel 1c wurden pigmentierte Pulverlacke hergestellt, appliziert und eingebrannt.

| | $c_1$ | $c_2$ | |
|---|---|---|---|
| Epoxid gemäß 1b | 1310,9 | 1281,6 | Gew.-T. |
| Verlaufmittel-Masterbatch gem. 1c | 125,0 | 125,0 | Gew.-T. |
| Blockiertes IPDI gemäß 5a | 64,1 | 93,4 | Gew.-T. |
| Weißpigment ($TiO_2$) | 1000,0 | 1000,0 | Gew.-T, |

Der pigmentierte Pulverlack gemäß 5$c_1$ wurde zwischen 150°C und 200°C eingebrannt. Die erhaltenen Werte der Lackfilme gibt die nachstehende Tabelle wieder.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 6 min/200°C | 60–70 | 183 | 91 | 5,5–6,3 | 0 | 92,5 | 86 |
| 8 min/200°C | 50–80 | 179 | 100 | 5,8–6,5 | 0 | >94 | 85 |
| 10 min/200°C | 60–90 | 184 | 100 | 5,9–6,7 | 0 | >94 | 88 |
| 6 min/190°C | 65–85 | 181 | 100 | 5,3–6,0 | 0 | >94 | 83 |
| 10 min/190°C | 70–90 | 180 | 100 | 5,7–6,4 | 0 | >94 | 87 |
| 12 min/190°C | 60–100 | 184 | 111 | 5,5–6,5 | 0 | >94 | 85 |
| 10 min/180°C | 70–100 | 185 | 91 | 5,4–6,0 | 0 | >94 | 81 |
| 12 min/180°C | 80–110 | 181 | 100 | 5,7–6,3 | 0 | >94 | 86 |
| 12 min/170°C | 60–85 | 182 | 100 | 5,3–5,8 | 0 | >94 | 82 |
| 14 min/170°C | 70–100 | 180 | 91 | 5,7–6,3 | 0 | >94 | 88 |
| 16 min/170°C | 50–90 | 187 | 100 | 5,9–6,6 | 0 | >94 | 83 |
| 18 min/160°C | 45–75 | 180 | 91 | 5,2–6,0 | 0 | >94 | 87 |
| 20 min/160°C | 60–80 | 179 | 100 | 5,5–6,1 | 0 | >94 | 88 |

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 20 min/150°C | 70–90 | 183 | 100 | 5,3–6,1 | 0 | >94 | 81 |
| 25 min/150°C | 80–100 | 187 | 91 | 5,5–6,4 | 0 | >94 | 85 |

Der pigmentierte Pulverlack gemäß Beispiel $5c_2$, der zwischen 130°C und 200°C eingebrannt wurde, zeigt eine wesentlich verbesserte Elastizität, hervorgerufen durch eine 50% ige Erhöhung des Vernetzeranteils. Außerdem konnten die Einbrennzeiten verkürzt bzw. die Temperaturen gesenkt werden. Die bestimmten mechanischen Eigenschaften der Lackfilme gibt die nachstehende Tabelle wieder.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 4 min/200°C | 60–70 | 186 | 91 | 4,2–4,9 | 0 | >94 | 86 |
| 6 min/200°C | 55–70 | 179 | 100 | 5,5–6,3 | 0 | >94 | 86 |
| 8 min/200°C | 50–75 | 187 | 111 | 6,4–6,9 | 0 | >94 | 87 |
| 4 min/190°C | 40–55 | 185 | 83 | 4,0–4,4 | 0 | 80,5 | 84 |
| 6 min/190°C | 40–50 | 187 | 100 | 5,5–6,0 | 0 | >94 | 81 |
| 8 min/190°C | 56–70 | 186 | 91 | 6,2–6,7 | 0 | >94 | 85 |
| 10 min/190°C | 40–55 | 185 | 100 | 6,0–6,9 | 0 | >94 | 87 |
| 6 min/180°C | 50–65 | 176 | 91 | 4,9–5,9 | 0 | 92,5 | 80 |
| 8 min/180°C | 30–40 | 180 | 87 | 5,5–6,6 | 0 | >94 | 81 |
| 10 min/180°C | 40–55 | 183 | 100 | 6,0–6,8 | 0 | >94 | 80 |
| 6 min/170°C | 70–95 | 180 | 100 | 6,4–6,9 | 0 | >94 | 84 |
| 8 min/170°C | 85–90 | 177 | 100 | 7,6–7,7 | 0 | >94 | 81 |
| 10 min/170°C | 115–125 | 179 | 100 | 7,1–7,3 | 0 | >94 | 85 |
| 8 min/160°C | 60–75 | 175 | 100 | 7,2–7,6 | 0 | >94 | 79 |
| 10 min/160°C | 60–80 | 173 | 111 | 8,3–8,8 | 0 | >94 | 81 |
| 12 min/160°C | 60–65 | 174 | 125 | 7,1–8,0 | 0 | >94 | 86 |
| 14 min/150°C | 60–70 | 180 | 100 | 6,4–6,9 | 0 | >94 | 82 |
| 16 min/150°C | 80–100 | 179 | 100 | 6,5–7,0 | 0 | >94 | 81 |
| 16 min/140°C | 60–80 | 175 | 91 | 4,4–5,4 | 0 | 80,5 | 83 |
| 18 min/140°C | 70–90 | 178 | 91 | 5,0–5,3 | 0 | >94 | 87 |
| 18 min/130°C | 70–80 | 165 | 87 | 4,4–5,0 | 0 | 80,5 | 81 |
| 20 min/130°C | 70–100 | 170 | 91 | 4,9–5,6 | 0 | 92,5 | 84 |

Beispiele 6

*6 a.* Blockiertes Polyisocyanat:

Zu 550 Gew.-T. des im Beispiel 2a beschriebenen Addukts aus 2 Molen IPDI und 1 Mol Diäthylenglykol wurden bei 100°C 196 Gew.-T. 2,4-Dimethylimidazolin so zugetropft, daß die Temperatur nicht über 110°C anstieg. Nach erfolgter 2,4-Dimethylimidazolinzugabe wurde das Reaktionsgemisch noch weitere 2 Stunden bei 110°C erhitzt. In dem so hergestellten Reaktionsprodukt konnte kein NCO mehr nachgewiesen werden. Das Reaktionsprodukt ist ein farbloses Pulver mit einem Schmelzbereich von 100—107°C und einem Erweichungspunkt von 60—95°C.

*6 b.* 1,2-Epoxidverbindung:

Es wurde das in Beispiel 1b beschriebene Epoxid eingesetzt.

*6 c.* Pigmentiertes, pulverförmiges Überzugsmittel:

Gemäß Beispiel 1c wurde ein pigmentierter Lack mit folgender Rezeptur hergestellt, appliziert und zwischen 160 und 180°C eingebrannt.

| | | |
|---|---|---|
| Epoxid gemäß 1b: | 1216,1 | Gew.-T. |
| Verlaufmittel Masterbatch gem. 1c: | 125,0 | Gew.-T. |
| Blockiertes IPDI gemäß 6a: | 158,9 | Gew.-T. |
| Weißpigment ($TiO_2$) | 1000,0 | Gew.-T. |

Die mechanischen Eigenschaften der erhaltenen Lackfilme gibt die nachstehende Tabelle wieder.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 8 min/200°C | 70–90 | 181 | 91 | 4,9–5,8 | 0 | 80,5 | 83 |
| 10 min/200°C | 60–90 | 184 | 100 | 5,7–6,0 | 0 | >94 | 81 |
| 12 min/200°C | 55–85 | 183 | 100 | 5,6–6,3 | 0 | >94 | 84 |
| 10 min/190°C | 50–80 | 179 | 87 | 5,1–5,9 | 0 | 92,5 | 86 |
| 12 min/190°C | 80–100 | 184 | 100 | 5,8–6,4 | 0 | >94 | 83 |
| 14 min/190°C | 65–105 | 183 | 111 | 5,8–6,6 | 0 | >94 | 85 |
| 12 min/180°C | 70–90 | 180 | 91 | 5,1–6,3 | 0 | >94 | 82 |
| 14 min/180°C | 65–85 | 178 | 100 | 6,2–6,8 | 0 | >94 | 87 |
| 16 min/180°C | 55–80 | 184 | 91 | 6,9–7,0 | 0 | >94 | 85 |
| 16 min/170°C | 60–80 | 182 | 87 | 6,4–7,1 | 0 | 80,5 | 85 |
| 18 min/170°C | 50–90 | 186 | 100 | 6,1–6,9 | 0 | >94 | 88 |
| 18 min/160°C | 70–100 | 185 | 91 | 5,5–5,8 | 0 | 80,5 | 81 |
| 20 min/160°C | 65–105 | 181 | 91 | 5,4–5,9 | 0 | 92,5 | 83 |

Beispiel 7

*7 a.* Blockiertes Polyisocyanat:

Zu einer Schmelze von 292 Gew.-T. 2-Phenylimidazolin wurden 174 Gew.-T. Toluylen-2,4-(2,6)-diisocyanat (aus 80% 2,4 und 20% 2,6) so zugetropft, daß die Temperatur im Reaktionskolben nicht

über 140°C stieg. Zur Vervollständigung der Reaktion wurde die Reaktionsmischung 3 h bei 140°C gehalten. Diese Bedingungen reichten für eine nahezu vollständige Umsetzung (NCO-Gehalt des Reaktionsproduktes 0,2%). Das Reaktionsprodukt ist ein weißes kristallines Pulver mit einem Schmelzbereich von 90—103°C, einer Glasumwandlungstemperatur (DTA) von 78—90°C und besitzt eine Aufspalttemperatur von ca. 130°C.

*7 b.* 1,2-Epoxidverbindung:
Es wurde das im Beispiel 1b beschriebene Epoxid eingesetzt.

*7 c.* Pigmentiertes, pulverförmiges Überzugsmittel:
Gemäß Beispiel 1c wurde ein pigmentierter Pulverlack folgender Rezeptur hergestellt, appliziert und bei 160°C und 180°C eingebrannt.

| | | |
|---|---|---|
| Epoxid gemäß 1b: | 1270 | Gew.-T. |
| Verlaufmittel-Masterbatch gemäß 1c: | 125 | Gew.-T. |
| Blockiertes TDI gemäß 7a: | 105 | Gew.-T. |
| Weißpigment ($TiO_2$): | 1000 | Gew.-T. |

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 10 min/180°C | 60–70 | 181 | 91 | 6,7–5 | 0 | 69 | 91 |
| 12 min/180°C | 70–90 | 184 | 100 | 6,3–8 | 0 | 94 | 90 |
| 14 min/180°C | 50–70 | 190 | 100 | 7,1–8,5 | 0 | 94 | 92 |
| 20 min/160°C | 55–80 | 188 | 100 | 6,5–7,8 | 0 | 80,5 | 89 |
| 25 min/160°C | 70–85 | 191 | 100 | 6,9–8,3 | 0 | 94 | 92 |

Die bei 180°C innerhalb 12 min eingebrannten Lackfilme wurden dem Kochwassertest unterworfen und zeigten nach 72 h keinen Angriff.

Beispiel 8

*8 a.* Blockiertes Polyisocyanat:
Zu einer Mischung aus 174 Gew.-T. Toluylen-2,4-(2,6)-diisocyanat (aus 80% 2,4 und 20% 2,6) und 300 Gew.-T. wasserfreiem Aceton wurden bei Raumtemperatur langsam 196 Gew.-T. 2,4-Dimethylimidazolin, die in 500 Gew.-T. wasserfreiem Aceton gelöst waren, zugetropft. Nach Beendigung der 2,4-Dimethylimidazolinzugabe wurde 1 h bei 50°C erhitzt, das Aceton abdestilliert und die letzten Reste Aceton im Vakuumtrockenschrank bei 60°C entfernt. (NCO-Gehalt des Reaktionsproduktes 0,1%). Das mit 2,4-Dimethylimidazolin blockierte Diisocyanat stellt ein weißes Pulver mit einem Schmelzbereich von 85—105°C dar, einer Glasumwandlungstemperatur (DTA) von 70—91°C und einer Aufspalttemperatur von ca. 150°C.

*8 b.* 1,2-Epoxidverbindung:
Es wurde das im Beispiel 1b beschriebene Epoxid eingesetzt.

*8 c.* Pigmentiertes, pulverförmiges Überzugsmittel:
Gemäß Beispiel 1c wurden pigmentierte Pulverlacke hergestellt, appliziert und eingebrannt.

| | $c_1$ | $c_2$ | |
|---|---|---|---|
| Epoxid gemäß 1b: | 1315 | 1285,4 | Gew.-T. |
| Verlaufmittel-Masterbatch gemäß 1c: | 125 | 125 | Gew.-T. |
| Blockiertes TDI gemäß 8a: | 60 | 89,6 | Gew.-T. |
| Weißpigment ($TiO_2$): | 1000 | 1000 | Gew.-T. |

Der pigmentierte Pulverlack gemäß 8 $c_1$ wurde bei 160°C und 180°C eingebrannt.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 10 min/180°C | 75–95 | 182 | 91 | 5,1–6,5 | 0 | 80,5 | 83 |
| 12 min/180°C | 70–85 | 184 | 100 | 6,4–7,1 | 0 | 94 | 85 |
| 16 min/160°C | 60–90 | 181 | 91 | 5,2–5,9 | 0 | 69 | 84 |
| 18 min/160°C | 80–105 | 186 | 111 | 5,8–6,7 | 0 | 94 | 87 |
| 20 min/160°C | 75–90 | 185 | 100 | 6,1–7,0 | 0 | 94 | 83 |

Der pigmentierte Pulverlack gemäß Beispiel 8$c_2$, der zwischen 160°C und 180°C eingebrannt wurde, zeigt eine wesentlich verbesserte Elastizität.

| Einbrenn-bedingungen | Mechanische Daten | | | | | | |
|---|---|---|---|---|---|---|---|
| Zeit/Temp. | SD | HK | HB | ET | GS | Imp. rev. | GG 60° |
| 6 min/180°C | 50–70 | 187 | 100 | 4,9–5,9 | 0 | 80,5 | 83 |
| 8 min/180°C | 80–90 | 185 | 100 | 5,6–6,8 | 0 | 94 | 81 |
| 10 min/180°C | 75–95 | 188 | 111 | 7,1–7,5 | 0 | 94 | 87 |
| 8 min/170°C | 55–65 | 186 | 100 | 6,5–7,1 | 0 | 94 | 84 |
| 10 min/170°C | 70–80 | 189 | 111 | 7,3–8,4 | 0 | 94 | 85 |
| 10 min/160°C | 60–75 | 184 | 111 | 7,9–8,4 | 0 | 94 | 88 |
| 12 min/160°C | 70–85 | 187 | 111 | 8,1–8,8 | 0 | 94 | 84 |

Beispiel 9

*9 a.* Herstellung eines isomeren Tetrahydropyrimidingemisches aus TMCPD und Benzoesäureester: (Verbindung A)

1 547 Gew.-T. Benzoesäuremethylester wurden zu 3 125 Gew.-T. eines Isomerengemisches aus 1-Amino-2-aminomethyl-3.3.5 bzw. -3.5.5-trimethylcyclopentan (TMCPD) in einen Reaktor eingefüllt, unter Rühren auf 190°C aufgeheizt und zur Reaktion gebracht. Es stellte sich ein Druck von ca. 9 bar ein. Das Reaktionsgemisch wurde dann 2,5 h bei der Temperatur von 190°C gehalten. Anschließend wurde der Druck entspannt und der Überschuß an TMCPD und die Abspaltprodukte Alkohol und Wasser abdestilliert. Durch Destillation im Ölpumpenvakuum (0,67 mbar) ließ sich im Temperaturbereich von 158—170°C ein Isomerengemisch verschiedener Tetrahydropyrimidine der folgenden Struktur isolieren:

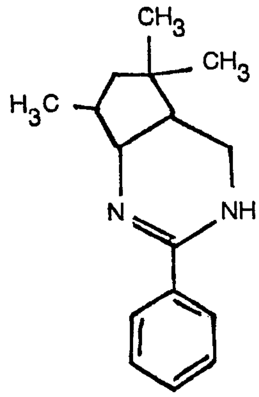

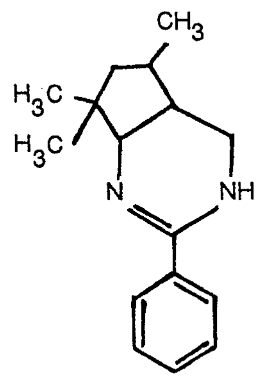

Das Produkt ist gelbich und hochviskos.
Ausbeute: 2 120 Gew.-Teile = 87%, bez. auf eingesetzten Ester

| | gefunden | theoretisch |
|---|---|---|
| mMol $NH_2$/g | 4,11 | 4,13 |
| Molgewicht | 243,3 | 242 |
| C | 79,13% | 79,34% |
| H | 9,30% | 9,09% |
| N | 11,75% | 11,57% |

*9 b.* Blockiertes Polyisocyanat:

Zu einer Mischung aus 222 Gew.-T. IPDI und 300 Gew.-T. wasserfreiem Aceton wurden bei Raumtemperatur langsam 484 Gew.-Teile des Produktes aus 9a, die in 500 Gew.-Teilen wasserfreiem Aceton gelöst waren, zugetropft. Nach Beendigung der Zugabe wurde eine Stunde bei 50°C erhitzt. Das Aceton wurde anschließend abdestilliert. Die letzten Reste an Aceton wurden durch Trocknung des Reaktionsproduktes bei 60°C im Vakuumtrockenschrank entfernt. Das mit dem Produkt aus 9a blockierte IPDI stellt ein weißes Pulver mit einem Schmelzbereich von 85—98°C dar, einem durch Differential-Thermoanalyse (=DTA) ermittelten Erweichungspunkt von 67—75°C und einem Gehalt an freiem Isocyanat von <0,2%.

*9 c.* 1,2-Epoxidverbindung:

Es wurde das in Beispiel 1b beschriebene Epoxid eingesetzt.

*9 d.* Pigmentierter Lack:

Die gemahlenen Produkte Epoxidverbindung, blockiertes IPDI entsprechend 9b und Verlaufmittel-Masterbatch wurden mit dem Weißpigment ($TiO_2$) entsprechend 1c gemischt, appliziert und eingebrannt.

Die Epoxidverbindung gemäß Beispiel 9c wurde mit wechselnden Mengen der blockierten Isocyanatkomponente gemäß Beispiel 9b umgesetzt.

Es wurden drei verschiedene Ansätze durchgeführt, bei denen das Mengenverhältnis zwischen Härter und 1,2-Epoxid variiert wurde, während die Menge Verlaufmittel (7,5 Gewichtsteile) und Weißpigment (600,0 Gewichtsteile) unverändert blieben.

Rezepturen

| Kennzeichen der Mischung | | $d_1$ | $d_2$ | $d_3$ |
|---|---|---|---|---|
| blockiertes IPDI gem. 9b | Gew.-T. | 24,1 | 46,5 | 68,0 |
| Epoxid gem. 9c | ,, | 800,9 | 778,5 | 757,0 |
| Verlaufmittel Masterbatch s. Seite 14 | ,, | 75,0 | 75,0 | 75,0 |
| Weißpigment ($TiO_2$) | ,, | 600,0 | 600,0 | 600,0 |

*9d* 1. Für den pigmentierten Pulverlack gemäß der Rezeptur $d_1$.

Bei der technischen Prüfung der bei 180—200°C im Laufe von 30 bis 12 Minuten eingebrannten Lacke wurden folgende Ergebnisse ermittelt:

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 12 min/200°C | 60–90 | 190 | 100 | 5–7 | 0 | 34,5 | 92 |
| 15 min/200°C | 80–110 | 200 | 100 | 6–7,5 | 0 | 80,5 | 93 |
| 20 min/200°C | 75–100 | 205 | 111 | 7–8,1 | 0 | >94 | 90 |
| 25 min/190°C | 75–100 | 210 | 91 | 7,5–8,0 | 0 | >94 | 90 |
| 30 min/180°C | 80–95 | 201 | 100 | 7,5–8,1 | 0 | >94 | 95 |

*9d* 2. Für den pigmentierten Pulverlack gemäß Rezeptur $d_2$.

Der pigmentierte Pulverlack gemäß 9 $d_2$ wurde zwischen 140°C und 200°C innerhalb von 14—4 Minuten gehärtet. Nach den verschiedenen Einbrennbedingungen zeigten diese Lacke folgende Ergebnisse:

| Einbrenn-bedingungen.. | Mechanische Kenndaten | | | | | | |
|---|---|---|---|---|---|---|---|
| Zeit/Temp. | SD | HK | HB | ET | GS | Imp. rev. | GG 60° |
| 4 min/200°C | 75 | 191 | 111 | 7,5–8,5 | 0 | 57,5 | 90 |
| 6 min/200°C | 70 | 188 | 111 | 8–8,1 | 0 | >94 | 93 |
| 8 min/200°C | 60–70 | 183 | 125 | 7,8–8,5 | 0 | >94 | 94 |
| 6 min/190°C | 50–85 | 187 | 111 | 7 | 0 | 69 | 93 |
| 8 min/190°C | 50–60 | 188 | 125 | 7,5–8,2 | 0 | >94 | 90 |
| 6 min/180°C | 50–80 | 190 | 111 | 6,8 | 0 | 69 | 90 |
| 8 min/180°C | 70–80 | 191 | 100 | 7,3–8,0 | 0 | >94 | 89 |
| 10 min/180°C | 60–70 | 189 | 100 | 7,2–8,1 | 0 | >94 | 88 |

| Einbrenn-bedingungen. | Mechanische Kenndaten | | | | | | |
|---|---|---|---|---|---|---|---|
| Zeit/Temp. | SD | HK | HB | ET | GS | Imp. rev. | GG 60° |
| 6 min/170°C | 80–90 | 193 | 100 | 6,5–7,0 | 0 | 69 | 89 |
| 8 min/170°C | 60–70 | 190 | 111 | 7,0–7,2 | 0 | >94 | 88 |
| 10 min/170°C | 60–80 | 195 | 125 | 6,9–7,8 | 0 | >94 | 90 |
| 8 min/160°C | 40–60 | 189 | 111 | 7–7,6 | 0 | >94 | 90 |
| 10 min/160°C | 55–70 | 190 | 125 | 7,1–7,9 | 0 | >94 | 91 |
| 8 min/150°C | 60 | 183 | 111 | 4–5,5 | 0 | 34,5 | 93 |
| 10 min/150°C | 55–75 | 188 | 111 | 7–7,6 | 0 | >94 | 90 |
| 14 min/140°C | 65–75 | 189 | 111 | 7–7,2 | 0 | >94 | 85 |

Die bei 180°C innerhalb 8 Minuten eingebrannten Lackfilme wurden außerdem einem Kochwassertest unterworfen. Dabei konnten nach 24 Stunden Einwirkungszeit keine Spuren eines Angriffs beobachtet werden, der Abrieb mit dem Taber-Abraser (1000 U, 1000 g, CS 17) liegt bei 30—45 mg. Der Gewichtsverlust ist wesentlich geringer als bei Filmen, die mit mit $\varepsilon$-Caprolactam blockierten Diisocyanaten hergestellt wurden, da das als Blockierungsmittel verwendete Tetrahydropyrimidin mit den Epoxid-Gruppen reagiert.

*9d* 3 für den pigmentierten Pulverlack gemäß Rezeptur $d_3$.

Der pigmentierte Pulverlack gemäß $d_3$ wurde zwischen 140°C und 200°C in 12 bis 4 Minuten eingebrannt. Dabei wurden folgende Versuchsergebnisse erhalten:

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 4 min/200°C | 40–60 | 183 | 100 | 6,8–7,3 | 0 | >94 | 90 |
| 6 min/200°C | 50–70 | 183 | 111 | 7,4 | 0 | >94 | 94 |
| 8 min/200°C | 50–60 | 185 | 125 | 7,4–7,6 | 0 | >94 | 93 |
| 4 min/190°C | 55 | 182 | 100 | 5,9–6,5 | 0 | 80,5 | 95 |
| 6 min/190°C | 60–70 | 181 | 111 | 7,1–8,0 | 0 | >94 | 90 |
| 8 min/190°C | 70 | 188 | 111 | 7,4–7,9 | 0 | >94 | 95 |
| 6 min/180°C | 50–70 | 183 | 100 | 5,9–6,8 | 0 | 80,5 | 90 |
| 8 min/180°C | 85–90 | 181 | 125 | 6,5–7,1 | 0 | >94 | 88 |
| 10 min/180°C | 70–100 | 185 | 111 | 7,1 | 0 | >94 | 92 |
| 6 min/170°C | 65–80 | 181 | 100 | 6,5–7,1 | 0 | >94 | 88 |
| 8 min/170°C | 60–110 | 185 | 125 | 6,7–7,4 | 0 | >94 | 89 |
| 10 min/170°C | 75–80 | 189 | 125 | 7,0–7,9 | 0 | >94 | 88 |

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 6 min/160°C | 70 | 189 | 111 | 5,1–5,5 | 0 | 80,5 | 86 |
| 8 min/160°C | 55 | 187 | 111 | 5,5–6,6 | 0 | >94 | 88 |
| 10 min/160°C | 45–60 | 183 | 111 | 7,0–7,4 | 0 | >94 | 87 |
| 8 min/150°C | 80 | 184 | 100 | 4,1–4,8 | 0 | 69 | 83 |
| 10 min/150°C | 50–65 | 187 | 111 | 6,0–6,6 | 0 | >94 | 86 |
| 12 min/140°C | 50–60 | 181 | 111 | 5,1–6,3 | 0 | >94 | 84 |

Die Lackfilme, die bei 180°C innerhalb von 8 Minuten gehärtet wurden, eigen ebenfalls eine ausgezeichnete Kochwasserfestigkeit, geringen Abrieb und geringen Gewichtsverlust.

*10 a.* Blockiertes Isocyanataddukt:

Zu 556 Gew.-Teile des in 2a hergestellten Adduktes aus 2 Mol IPDI und 1 Mol Diäthylenglykol wurden bei 120°C portionsweise 484 Gew.-Teile Verbindung A (Beispiel 9a) so zugegeben, daß die Temperatur nicht über 125°C anstieg. Nach Beendigung der Zugabe wurde das Reaktionsgemisch noch 2 Stunden bei 120°C erhitzt. Das Reaktionsprodukt ist ein blaßgelbes Pulver mit einem Schmelzbereich von 89—101°C, einem Erweichungspunkt (DTA) von 75—86°C und einem freien NCO-Gehalt von 0,2%.

*10 b.* 1,2-Epoxidverbindung:

Es wurde das in Beispiel 1b beschriebene Epoxid eingesetzt.

*10 c.* Pigmentierter Lack:

Gemäß Beispiel 9d wurden zwei pigmentierte Pulverlacke mit folgenden Rezepturen hergestellt, appliziert und eingebrannt:

Rezepturen

| Kennzeichen der Mischung | | $d_1$ | $d_2$ |
|---|---|---|---|
| blockiertes IPDI gem. 10b | Gew.-T. | 45,8 | 89,2 |
| Epoxid gem. 1b | ,, | 1054,2 | 1010,8 |
| Verlaufmittel Masterbatch s. Seite 14 | ,, | 100,0 | 100,0 |
| Weißpigment ($TiO_2$) | ,, | 800,0 | 800,0 |

*10* d. Untersuchungsergebnisse

*10 d* 1. Für den pigmentierten Pulverlack gemäß Rezeptur 10$d_1$.

Nach Härtung bei 190 und 200°C im Laufe von 25 bis 12 Minuten wurden folgende Ergebnisse ermittelt:

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 12 min/200°C | 55–80 | 189 | 100 | 5,1–6,5 | 0 | 23 | 91 |
| 15 min/200°C | 75–90 | 192 | 111 | 6,3–7,1 | 0 | 69 | 90 |
| 20 min/200°C | 65–95 | 188 | 111 | 6,5–7,3 | 0 | >94 | 92 |
| 25 min/190°C | 60–70 | 185 | 111 | 7,5 | 0 | >94 | 93 |

*10d* 2. Für den pigmentierten Pulverlack gemäß Beispiel $10d_2$.

Der pigmentierte Pulverlack gemäß Beispiel $10d_2$, der zwischen 150°C und 200°C im Laufe von 12 bis 4 Minuten gehärtet wurde, zeigt infolge der Erhöhung des Vernetzeranteils eine wesentlich verbesserte Elastizität.

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 4 min/200°C | 75–95 | 183 | 100 | 3–4,1 | 0 | 69 | 93 |
| 6 min/200°C | 55–60 | 186 | 111 | 6,2–7,8 | 0 | >94 | 91 |
| 8 min/200°C | 40–70 | 185 | 111 | 6,8–7,9 | 0 | >94 | 95 |
| 6 min/190°C | 55 | 180 | 100 | 6,5–7,0 | 0 | >94 | 95 |
| 8 min/190°C | 50–65 | 182 | 100 | 7,6 | 0 | >94 | 92 |
| 10 min/190°C | 50–60 | 182 | 111 | 7,6–7,8 | 0 | >94 | 96 |
| 6 min/180°C | 50–70 | 179 | 100 | 5,6–6,8 | 0 | 80,5 | 90 |
| 8 min/180°C | 40–55 | 181 | 100 | 7,4–7,8 | 0 | >94 | 95 |
| 10 min/180°C | 45–60 | 183 | 111 | 7,2–7,8 | 0 | >94 | 96 |
| 8 min/170°C | 70 | 182 | 111 | 6,7–7,5 | 0 | 80,5 | 90 |
| 10 min/170°C | 40–55 | 181 | 100 | 8,0 | 0 | >94 | 91 |
| 12 min/170°C | 40–60 | 181 | 100 | 7,6–8,1 | 0 | >94 | 95 |
| 8 min/160°C | 45–80 | 182 | 111 | 5,5–6,4 | 0 | 80,5 | 91 |
| 10 min/160°C | 45–60 | 185 | 125 | 6,5–7,9 | 0 | >94 | 95 |
| 12 min/160°C | 45–65 | 183 | 111 | 6,5–7,6 | 0 | >94 | 96 |
| 12 min/150°C | 40–65 | 181 | 111 | 5,5–7,2 | 0 | >94 | 90 |

*11a.* Herstellung des Tetrahydropyrimidin-Isomerengemisches aus TMCPD und Essigester (Verbindung B):

1248 g eines Isomerengemisches aus 1-Amino-2-aminomethyl-3.3.5 bzw. -3.5.5-trimethyl-cyclopentan (TMCPD) wurden mit 216 g Essigsäureäthylester (Molverhältnis 4:1) vermischt und unter

Rühren in einem Reaktor auf 190°C aufgeheizt.

Die Reaktionsdauer betrug 2,5 Stunden. Nach dieser Zeit wurde der Diaminüberschuß zusammen mit den Abspaltprodukten Methanol und Wasser abdestilliert. Im Vakuum bei 0,67 mbar ließ sich in einem Temperaturbereich von 100—119°C ein Isomerengemisch mit Tetrahydropyrimidinstruktur in einer Ausbeute von 274 g = 76%, bez. auf Ester, abdestillieren. Das zähflüssige, gelbe Produkt enthält u.a. Verbindung folgender Formel:

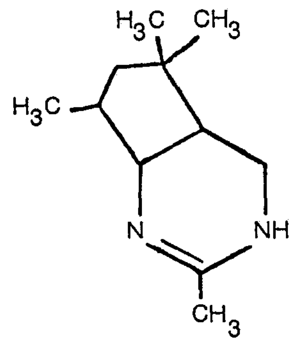

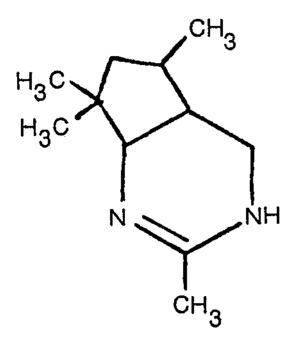

| | gefunden | theoretisch |
|---|---|---|
| C | 73,13% | 73,33% |
| H | 10.89% | 11,11% |
| N | 15,75% | 15,53% |
| Äquivalentgewicht | 183 | 180 |

11 b. Blockiertes Polyisocyanat:

Zu 360 Gew.-T. Verbindung B wurden 222 Gew.-T. IPDI so zugetropft, daß die Temparatur im Reaktionskolben nicht über 120°C stieg. Zur Vervollständigung der Reaktion wurde die Reaktionsmischung bei 120°C gehalten. Diese Bedingungen reichen für eine nahezu vollständige Umsetzung. Das Reaktionsprodukt ist ein gelbliches kristallines Pulver mit einem Schmelzbereich von 95—104°C, einem Erweichungspunkt (DTA) von 59—74°C und einem freien NCO-Gehalt <0,1%.

11 c. 1,2-Epoxidverbindung

Es wurde die in Beispiel 1b beschriebene 1,2-Epoxidverbindung eingesetzt.

11 d. Pigmentierter Lack

Gemäß Beispiel 9d wurde ein pigmentierter Pulverlack gemäß folgender Rezeptur hergestellt, appliziert und eingebrannt.

Rezepturen

| Kennzeichen der Mischung | | d |
|---|---|---|
| blockiertes IPDI gem, 3b | Gew.–T. | 118,9 |
| Epoxid gemäβ 1c | ,, | 981,1 |
| Verlaufmittel Masterbatch s. Seite 4 | ,, | 100,0 |
| Weiβpigment ($TiO_2$) | ,, | 800,0 |

11 c. Untersuchungsergebnisse für den pigmentierten Pulverlack gemäß Beispiel 11 d

Der pigmentierte Pulverlack gemäß Beispiel 11d wurde zwischen 160° und 200°C im Laufe von 22—8 Minuten eingebrannt und erzielte folgende Untersuchungsergebnisse:

| Einbrenn-bedingungen | Mechanische Kenndaten | | | | | | |
|---|---|---|---|---|---|---|---|
| Zeit/Temp. | SD | HK | HB | ET | GS | Imp. rev. | GG 60° |
| 8 min/200°C | 50–70 | 179 | 111 | 3,8–4,1 | 0 | 80,5 | 83 |
| 10 min/200°C | 60–75 | 183 | 111 | 3,8–4,4 | 0 | >94 | 86 |
| 10 min/190°C | 55–65 | 180 | 125 | 3,6–4,6 | 0 | 69 | 81 |
| 12 min/190°C | 50–60 | 177 | 111 | 4,1–5,1 | 0 | >94 | 84 |
| 14 min/180°C | 65–70 | 184 | 111 | 3,6–4,0 | 0 | 69 | 88 |
| 14 min/180°C | 60–85 | 182 | 111 | 3,9–4,8 | 0 | >94 | 87 |
| 16 min/170°C | 55–65 | 186 | 100 | 3,6–4,7 | 0 | 57,5 | 81 |
| 18 min/170°C | 60–70 | 183 | 111 | 3,8–4,9 | 0 | 80,5 | 85 |
| 22 min/160°C | 65–80 | 182 | 111 | 3,6–4,4 | 0 | 69 | 84 |

Beispiele 12—14

Die folgenden Beispiele von Pulverlacken eignen sich insbesondere für die Beschichtung von Großrohren und Behältern aus Metall. Das Auftragen des Pulvers auf sandgestrahlte Stahlsubstrate, die auf eine Temperatur von 240—270°C erhitzt werden, erfolgt mittels der elektrostatischen Methode. Die Schichtstärke des ausgehärteten duroplastischen Überzuges betrug 0,300—0,350 mm (elektromagnetisch gemessen).

Bei den Beispielen 12—14 wurde das Verlaufmittel, nämlich Polyacrylsäure-n-butylester mit einem k-Wert von 30—35 direkt (also ohne die Herstellung eines Masterbatches) zugesetzt. Die Mengenanteile der Zusätze, die Vorerhitztemperatur vor der Aufbringung der Lacke auf die Rohre und Prüfstäbe und die Verweilzeit sind in der folgenden Tabelle zusammengestellt, in deren unterem Teil die Prüfergebnisse angegeben sind.

Zusätzlich zu den vorher beschriebenen Untersuchungsmethoden wurden noch Teste durchgeführt:

*1.* Lagerung in kochender Natronlauge

Beschichtete Prüfbleche von 200 mm Länge und 8 mm Dicke wurden mit einer Metallsäge in der Mitte zersägt. Die so erhaltenen 100 mm langen Blechstücke wurden in 10-%iger, 100°C heißer Natronlauge 28 Stunden gekocht.

*2.* Dornbiegeprüfung (gemäß DIN 53 152)

*3.* Biegeprüfung an Stahlstäben

Analog der Rohrbeschichtung wurde ein Stahlrundstab von 8 mm Stärke beschichtet und abgekühlt. Zur Prüfung der Beschichtung erfolgte die Biegung über einen zylindrischen Körper vom 3-fachen (=24 mm) Durchmesser des Stabes.

*4.* Porenfreiheit

Die Prüfung wurde mit Hilfe des Porensuchgerätes "Porotest 15" der Fa. Elektro Physik, Köln, durchgeführt. Damit ist es möglich, bei Prüfspannungen bis zu 15 KV, kleinste Poren in den Beschichtungen nachzuweisen.

*5.* Schlagfestigkeit nach Gardner

In Anlehnung an den Kugelschlag nach Gardner (reverse impact) ASTM—D 2794 wurde die Beschichtung mit dem Kugelgewicht von 900 g nach einem Fall aus 102 cm Höhe schlagartig belastet.

*6.* Wattebauschtest

Beim sog. Wattebauschtest wurde ein mit MIBK oder Aceton getränkter Wattebausch 1 Minute auf die ausreagierte Beschichtung gedrückt. War die Schicht gut vernetzt, läßt sich die Beschichtung durch das Lösungsmittel nicht erweichen.

7. Disbonding-Test
   Der Test wurde nach den Vorschriften des DRAFT, British Gas Standard, PS/CW 1, durchgeführt.

Rezepturen und Versuchsergebnisse bei den Beispielen 12 bis 14

| Beispiel Nr. | | 12 | 13 | 14 |
|---|---|---|---|---|
| blockiertes IPDI nach Beispiel 9b | Gew.-T. | 72 | 102,4 | – |
| blockiertes IPDI nach Beispiel 10b | ,, | – | – | 100,7 |
| Epoxid nach Beispiel 1b | ,, | 1.302 | 1,241,6 | 1,243,3 |
| Verlaufmittel | ,, | 6,0 | 6,0 | 6,0 |
| $TiO_2$ (Pulver) | ,, | 60,0 | 75,0 | 75,0 |
| Chromoxidgrün | ,, | 31,5 | – | |
| Chromechtgrün LD Supra 67 B | ,, | – | 75,0 | 75,0 |
| Chromgelb 62 C | ,, | 24,0 | – | – |
| Fe-Oxidrot 130 F | ,, | 1,5 | – | – |
| Fe-Oxidschwarz | ,, | 3 | – | – |
| Vorerhitzung der Rohre und Stäbe | °C | 270 | 270 | 270 |
| Zeit bis zum Abschrecken | sec | 45 | 35 | 45 |
| Untersuchungsmethoden | | | | |
| 1. Schichtdicke SD | mm | 0,340–0,370 | 0,360–0,390 | 0,370–0,400 |
| 2. Gitterschnitt nach DIN 53 151 | – | 0 | 0 | 0 |
| 3. Lagerung in kochender NaOH (28 Std.) NaOH-Unterwanderung an einzelnen Stellen der Schnittkante | mm | 2–3 | 2–3 | 2–3 |
| 4. Dornbiegeprüfung nach DIN 53 152 | – | <2 | <2 | <2 |
| 5. Biegeprufung an Stahlstäben | – | Film ohne Risse und Poren | Film ohne Risse und Poren | Film ohne Risse und Poren |
| 6. Porotest (Porotester 15 kV) | – | porenfrei | porenfrei | porenfrei |
| 7. Schlagfestigkeit nach Gardner | | | | |
| Deformierung | – | leicht | leicht | leicht |
| Risse | – | 0 | 0 | 0 |
| 8. Wattebauschtest mit MIBK | – | beständig | beständig | beständig |
| Aceton | – | beständig | beständig | beständig |
| 9. Disbonding-Test (nach 30 Tagen) | – | sehr gut | sehr gut | sehr gut |

Anstelle des in dem Beispiel 9b als Blockierungsmittel verwendeten Tetrahydropyrimidingemischs können auch andere, wie die vorstehend genannten, für diesen Zweck eingesetzt werden.

Bei Anwendung von gemischt-blockierten Polyisocyanaten, d.h. sowohl mit Imidazolinen als auch mit Tetrahydropyrimidinen blockierten, können diese durch Vermischen der Einzelbestandteile als auch durch Blockierung mit Gemischen cyclischer Amidine hergestellt werden. Bei gemischt-blockierten Polyisocyanaten sollte mindestens 1 Gew.% der jeweils 2. Komponente mitenthalten sein.

**Patentansprüche**

1. Pulverförmige Überzugsmittel mit hoher Lagerstabilität und einer Korngröße kleiner als 0,25 mm, vorzugsweise zwischen 0,02 und 0,06 mm, auf der Grundlage von 1,2-Epoxidverbindungen mit mehr als einer 1,2-Epoxidgruppe im Molekül und einem unteren Aufschmelzpunkt von > 40°C, Härtungsmitteln und üblichen Lackzusätzen, gekennzeichnet dadurch, daß das Überzugsmittel als Härtungsmittel mit cyclischen Amidinen der allgemeinen Formel

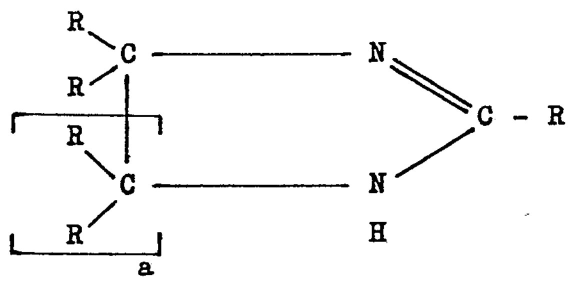 blockierte Polyisocyanate

enthält, worin a 1 oder 2, R gleiche oder verschiedene Substituenten aus der Gruppe Wasserstoff, Alkyl-, Cycloalkyl-, Aralkyl- und Arylrest und gegebenenfalls 2 geminale oder vicinale R's gemeinsam Bestandteile eines unsubstituierten oder alkylsubstituierten Cycloalkylringes sind, wobei das Härtungsmittel zu 2—15 Gew.%, bezogen auf die Menge an fester 1,2-Epoxidverbindung, in dem Überzugsmittel vorhanden ist.

2. Pulverförmige Überzugsmittel nach Anspruch 1, dadurch gekennzeichnet, daß das mit cyclischen Amidinen blockierte Polyisocyanat im Falle der Diisocyanate der allgemeinen Formel

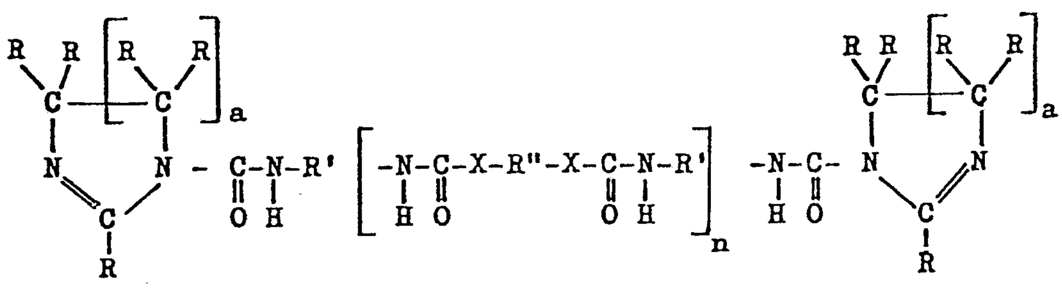

entspricht, worin a und R die vorstehende Bedeutung, n 0 oder 1, X O, S oder eine NH-Gruppe, R′ einen gleichen oder verschiedenen, gegebenenfalls alkylsubstituierten Alkylen-, Cycloalkylen- oder Arylenrest und R″ ein gegebenenfalls durch einen oder mehrere Alkylreste, wobei mehrere auch gemeinsamer Bestandteil eines cycloaliphatischen Ringes sind, substituierter, gesättigter oder ungesättigter Alkylenrest mit 2—18 C-Atomen, der gegebenenfalls ein oder mehrere Sauerstoff- oder Schwefelatome in der Kohlenwasserstoffkette enthält, oder ein gegebenenfalls alkylsubstiuierter Arylenrest oder Cycloalkylenrest ist.

3. Verfahren zur Herstellung der pulverförmigen Überzugsmittel gemäß Anspruch 1 oder 2, dadurch gekennzeichnet, daß man die festen 1,2-Epoxidverbindungen und die Härtungsmittel, gegebenenfalls nach Zugabe der Lackzusätze, in den angegebenen Mischungsverhältnissen zunächst mischt und mindestens 30°C unterhalb der Aufspalttemperatur das Härtungsmittel extrudiert und anschließend auf eine Korngröße kleiner als 0,25 mm, vorzugsweise < 0,1 mm und einem Korngrößenmaximum zwischen 0,02 mm und 0,06 mm, vorzugsweise zwischen 0,03 mm und 0,05 mm, mahlt und gegebenenfalls die gröbere Fraktion durch Siebung entfernt.

4. Verfahren zur Herstellung von Überzügen auf der Basis von Pulverlacken durch Umsetzung von pulverförmigen Überzugsmitteln nach Anspruch 1 sowie den üblichen Lackzusätzen nach Aufbringung auf das Substrat mittels bekannten Methoden durch Härtung oberhalb der Aufspalttemperatur der blockierten Polyisocyanate.

5. Verfahren nach Anspruch 4, dadurch gekennzeichnet, daß man die Pulverlacke auf Metallrohre oder -behälter, die auf 200—300°C erhitzt sind, appliziert und gegebenenfalls die Aushärtung des

Überzuges durch die Wärmekapazität der Werkstücke ohne Zufuhr weiterer Wärmeenergie durchführt.

6. Verfahren nach Anspruch 4 und 5, dadurch gekennzeichnet, daß man die Pulverbeschichtung außen auf die Rohre bzw. auf die Behälter appliziert.

7. Verfahren nach Anspruch 4 und 5, dadurch gekennzeichnet, daß man die Pulverbeschichtung innen auf die Rohre bzw. Behälter appliziert.

**Revendications**

1. Produits de revêtement en poudre ayant une grande stabilité au magasinage et une finesse particulaire inférieure à 0,25 mm, de préférence entre 0,02 et 0,06 mm, à base de combinaisons époxydées comprenant plus d'un groupe 1,2-époxyde dans la molécule et ayant un point de fusion supérieur à 40°C, á base aussi d'agents durcissants et des additifs habituels dans les vernis, produit caractérisé en ce qu'il contient, comme agent durcissant, des polyisocyanates bloqués comportant des amidines cycliques répondant à la formule générale suivante

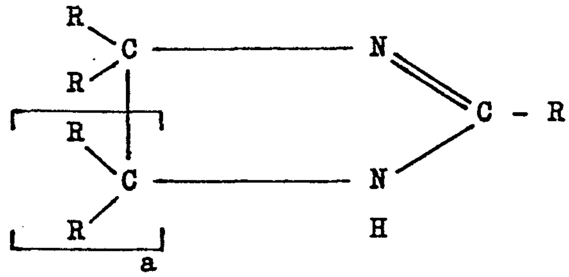

où a est égal à 1 ou 2, R représente des substituants, semblables ou différents, du groupe formé par l'hydrogène, des radicaux alcoyle, cycloalcoyle, aralcoyle et aryle, et éventuellement 2 parties constituantes R' communes, géminales ou vicinales, d'un cycle cycloalcoyle non-substitué ou alkoylsubstitué, l'agent durcissant étant présent dans le produit de revêtement à raison de 2 à 15% en poids, calculé sur la quantité de combinaison 1,2-époxyde solide.

2. Produits de revêtement en poudre suivant la revendication 1, caractérisé en ce que le polyisocyanate bloqué avec des amidines cycliques correspond, dans le cas des diisocyanates, à la formule générale

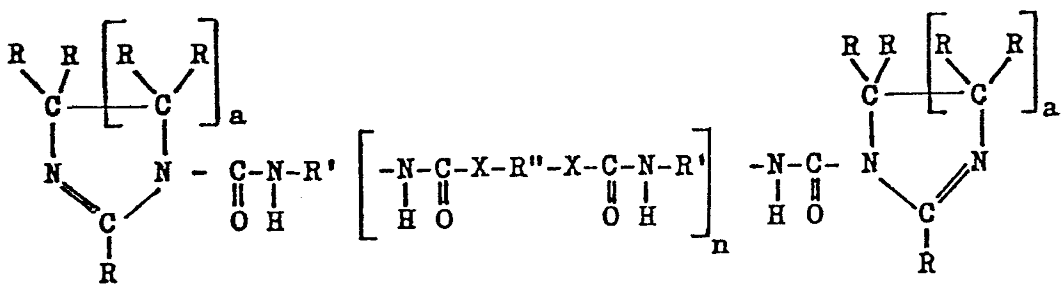

où a et R ont la signification précédente, n est 0 or 1, X est O ou S, ou un groupe NH, R' est un radical alkylène, cycloalkylène ou arylène éventuellement substitué par un alcoyle, semblables ou différents, et R'' représente un radical alcoylène à 12 à 18 atomes de carbone, saturé ou non saturé, substitué éventuellement par un ou plusieurs radicaux alcoyle, plusieurs étant aussi une partie commune d'un cycle cycloaliphatique, et qui contient éventuellement un ou plusieurs atomes d'ogygène ou de soufre dans la chaîne hydrocarbure, ou est un radical arylène ou cycloalkylène éventuellement substitué par un alcoyle.

3. Procédé pour la fabrication de produit de revêtement en poudre suivant l'une des revendications 1 et 2, caractérisé en ce que l'on mélange d'abord les combinaisons 1,2-époxydes solides et l'agent durcissant, éventuellement après additions des additifs pour vernis, et on les extrude à une température d'au moins 30°C inférieure à la température de fission de l'agent durcissant, et on réduit ensuite en poudre, à une grosseur de grain inférieure à 0,25 mm, de préférence inférieure à 0,1 mm, la grosseur de grain maximale se situant entre 0,02 mm et 0,06 mm et de particulièrement entre 0,03 et 0,05 mm, et on élimine éventuellement la fraction plus grossière par tamisage.

4. Procédé pour la réalisation de revêtements à base de vernis en poudre par réaction de produit de revêtement en poudre suivant la revendication 1, ainsi que les additifs courants dans les vernis, après application sur le substrat, au moyen des procédés connus, grâce à un durcissement au-dessus de la température de fission du polyisocyanate bloqué.

5. Procédé suivant la revendication 4, caractérisé en ce que l'on applique le vernis en poudre sur

des tuyaux ou des réservoirs métalliques qui sont chauffés à 200 à 300°C, et que l'on assure éventuellement le durcissement du revêtement au moyen de la capacité thermique des pièces revêtues, sans fourniture d'une énergie thermique supplémentaire.

6. Procédé suivant l'une des revendications 4 et 5, caractérisé en ce que l'on applique la couche de poudre sur la face extérieure des tuyaux ou du réservoir.

7. Procédé suivant l'une des revendications 4 et 5, caractérisé en ce que l'on applique la couche de poudre sur la face intérieure des tuyaux ou du réservoir.

## Claims

1. Powdery coating products with high storage stability and a grain size smaller than 0,25 mm, preferably between 0,02 and 0,06 mm, based upon 1,2-epoxide compounds with more than one 1,2-epoxide group in the molecule and a lower fusion point > 40°C, hardening agents and customary lacquer additives, characterised in that the coating product contains as hardening agent polyisocyanates blocked with cyclic amidines of the general formula

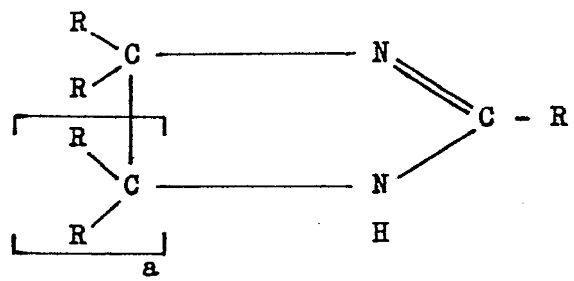

wherein a means 1 or 2, R means same or different substituents selected from the group of hydrogen, alkyl, cycloalkyl, aralkyl, and aryl radical, and if necessary, 2 geminal or vicinal R's together are substituents of an unsubstituted or alkylsubstituted cycloalkyl ring, whereby the hardening agent in the coating product amounting to 2—15 wt.% with respect to the quantity of solid 1,2-epoxide compound.

2. Powdery coating products according to Claim 1, characterised in that the polyisocyanate blocked with cyclic amidines corresponds, in the case of the diisocyanates, to the general formula

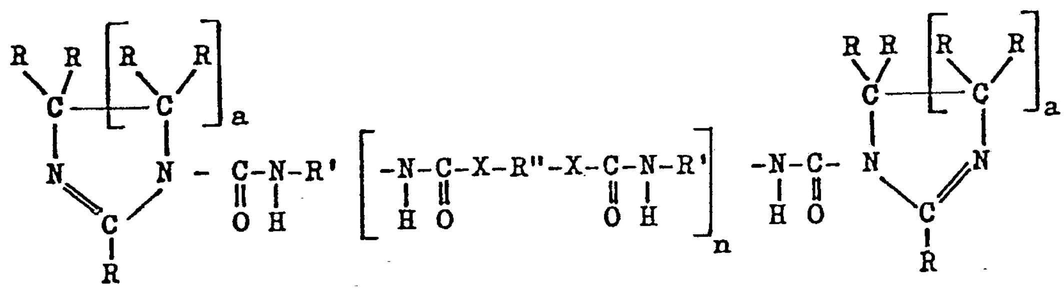

wherein a and R have the aforesaid meaning, n is 0 or 1, X is O, S or an NH group, R' is a similar or different if necessary, alkylsubstituted alkylene, cycloalkylene or arylene radical and R'' is a saturated or unsaturated alkylene radical with 2—18 C-atoms, if necessary substituted by one or more alkyl radicals, where more than one can also jointly form a component of a cycloaliphatic ring, and if necessary, containing one or more oxygen or sulfur atoms in the hydrocarbon chain, or it is an if necessary alkylsubstituted arylene radical or a cycloalkylene radical.

3. A method for producing the powdery coating products according to Claims 1 or 2, characterised in that the solid 1,2-epoxide compounds and the hardening agent, if necessary after addition of the lacquer additives, are mixed in the given proportions and the hardening agent is extruded at least 30°C below the splitting temperature and then the product is milled to a grain size smaller than 0,25 mm, preferably < 0,1 mm, and a maximum grain size between 0,02 and 0,06 mm, preferably between 0,03 and 0,05 mm, and if necessary, the coarser fraction is removed by screening.

4. A method for producing coatings on the basis of powdered lacquers by reaction of powdery coating products according to Claim 1, as well as the usual lacquer additives after application on the substrate by means of known methods through hardening below the splitting temperature of the blocked polyisocyanates.

5. A method according to Claim 4, characterised in that the powdered lacquers are applied on metal pipes or containers, which are heated to 200—300°C, and if necessary, the hardening of the coating is carried out by the heat capacity of the work piece without supply of further heat energy.

6. A method according to Claims 4 and 5, characterised in that the powdered coating is applied

outward on the pipes respectively containers.

7. A method according to Claims 4 and 5, characterised in that the powdered coating is applied inside on the pipes respectively containers.